(19) Europäisches Patentamt / European Patent Office / Office européen des brevets

(11) **EP 4 280 522 A1**

(12) **EUROPEAN PATENT APPLICATION**
published in accordance with Art. 153(4) EPC

(43) Date of publication:
**22.11.2023 Bulletin 2023/47**

(21) Application number: **22739802.1**

(22) Date of filing: **17.01.2022**

(51) International Patent Classification (IPC):
*H04L 5/00* (2006.01)     *H04L 1/08* (2006.01)
*H04L 1/00* (2006.01)     *H04L 1/16* (2023.01)
*H04W 72/04* (2023.01)     *H04W 72/12* (2023.01)

(52) Cooperative Patent Classification (CPC):
**H04L 1/00; H04L 1/08; H04L 1/16; H04L 5/00;
H04W 72/04; H04W 72/12**

(86) International application number:
**PCT/KR2022/000807**

(87) International publication number:
**WO 2022/154610 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 15.01.2021  KR 20210005819
06.04.2021  KR 20210044628
01.10.2021  KR 20210131058
05.11.2021  KR 20210151372
12.11.2021  KR 20210155843

(71) Applicant: **LG Electronics Inc.
Yeongdeungpo-gu
Seoul 07336 (KR)**

(72) Inventors:
• **YOU, Hyangsun
  Seoul 06772 (KR)**
• **YANG, Suckchel
  Seoul 06772 (KR)**
• **KO, Hyunsoo
  Seoul 06772 (KR)**

(74) Representative: **Plasseraud IP
66, rue de la Chaussée d'Antin
75440 Paris Cedex 09 (FR)**

(54) **TBOMS PUSCH METHOD AND DEVICE USING METHOD**

(57)     The present specification provides a method for transmitting one of a physical uplink shared channel (PUSCH) and a physical uplink control channel (PUCCH) performed by a terminal in a wireless communication system, and a device using same, the method being characterized by: performing initial access with a base station; determining whether a transmission resource of the PUSCH and a transmission resource of the PUCCH overlap; and on the basis of the transmission resources of the PUSCH and the transmission resources of the PUCCH overlapping, transmitting one of the PUSCH or the PUCCH to the base station, wherein on the basis of the PUSCH being a TB processing over multi-slot (TBoMS) PUSCH, the terminal does not transmit the PUSCH but transmits the PUCCH to the base station, wherein the TBoMS PUSCH is a PUSCH in which one transport block (TB) is mapped on a plurality of slots.

FIG. 11

EP 4 280 522 A1

**Description**

**TECHNICAL FIELD**

This specification relates to wireless communication.

**BACKGROUND ART**

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this specification, for convenience of description, this technology may be referred to as new RAT or new radio (NR).

Meanwhile, in this specification, it is intended to provide a configuration related to TBoMS PUSCH.

**DISCLOSURE**

**TECHNICAL SOLUTION**

According to an embodiment of the present specification, provided are a method and an apparatus using the method. The method includes based on the overlapping transmission resources of the PUSCH and the transmission resources of the PUCCH, either the PUSCH or the PUCCH is transmitted to the base station. Based on that the PUSCH is a TB processing over multi-slot (TBoMS) PUSCH, the UE does not transmit the PUSCH and transmit the PUCCH to the base station. And the TBoMS PUSCH is a PUSCH to which one transport block (TB) is mapped on a plurality of slots.

**ADVANTAGEOUS EFFECTS**

According to the present specification, transmission bits are not changed due to UCI multiplexing, so that stable data transmission can be performed.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

**BRIEF DESCRIPTION OF THE DRAWINGS**

FIG. 1 illustrates a system structure of a New Generation Radio Access Network (NG-RAN) to which NR is applied.

FIG. 2 illustrates a functional division between an NG-RAN and a 5GC.

FIG. 3 illustrates an example of a frame structure that may be applied in NR.

FIG. 4 shows an example of a frame structure for a new radio access technology.

FIG. 5 shows an example of a 5G usage scenario to which the technical features of the present specification can be applied.

FIG. 6 schematically illustrates an example for PUSCH repetition type A.

FIG. 7 schematically illustrates an example for PUSCH repetition type B.

FIG. 8 schematically illustrates an example of TBoMS.

FIG. 9 schematically illustrates another example of TBoMS.

FIG. 10 shows a generalized example for the case where TBoMS is repeated four times.

FIG. 11 is a flowchart of a method of transmitting one of a PUSCH or a PUCCH according to an embodiment of the present specification.

FIG. 12 schematically illustrates timeline requirements for UCI multiplexing on TBoMS.

FIG. 13 is a flowchart of a method of transmitting one of a PUSCH or a PUCCH from a UE point of view according to an embodiment of the present specification.

FIG. 14 is a block diagram of an example of an apparatus for transmitting one of a PUSCH or a PUCCH from a UE point of view, according to an embodiment of the present specification.

FIG. 15 is a flowchart of a method of receiving one of a PUSCH or a PUCCH from a base station perspective, according to an embodiment of the present specification.

FIG. 16 is a block diagram of an example of an apparatus for receiving one of a PUSCH or a PUCCH, from a base station perspective, according to an embodiment of the present specification.

FIG. 17 illustrates the communication system 1 applied to this specification.

FIG. 18 illustrates a wireless device applicable to this specification.

FIG. 19 shows another example of a wireless device applicable to the present specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present specification for convenience.

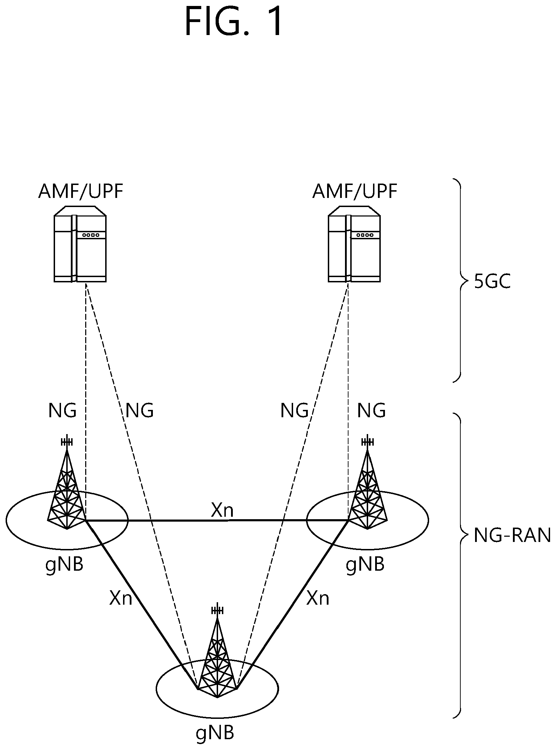

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

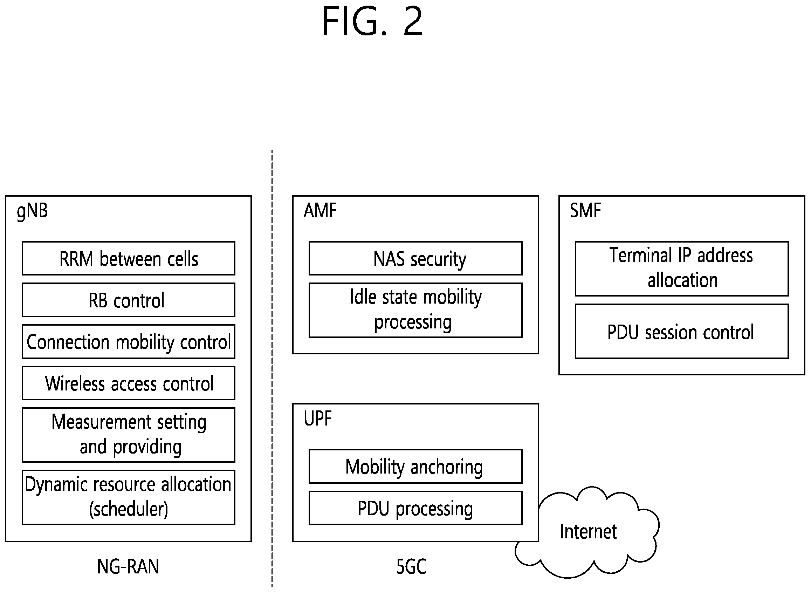

FIG. 2 illustrates a functional division between an NG-RAN and a 5GC.

Referring to FIG. 2, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

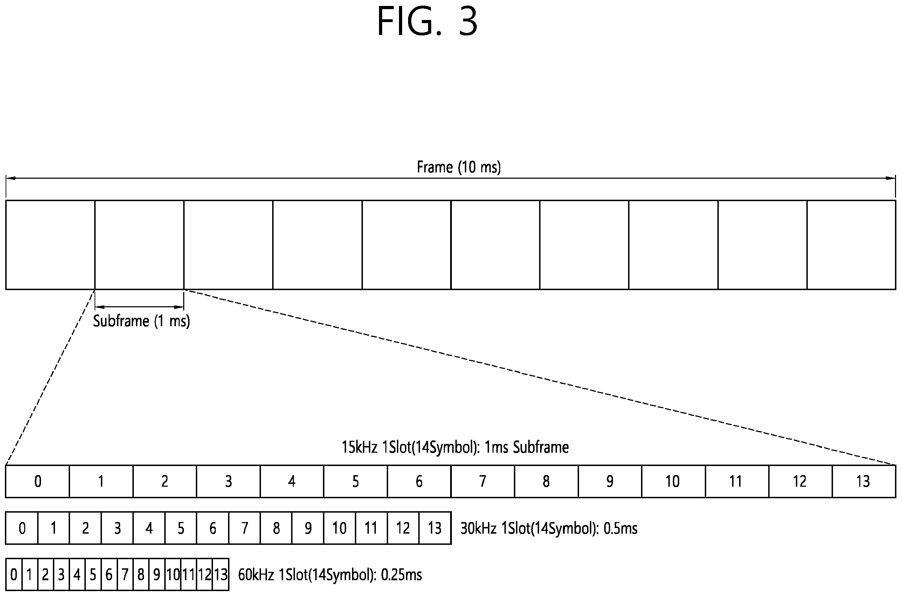

FIG. 3 illustrates an example of a frame structure that can be applied in NR.

Referring to FIG. 3, a frame may consist of 10 milliseconds (ms) and may include 10 subframes of 1 ms.

One or a plurality of slots may be included in the subframe according to the subcarrier spacing.

The following table 1 illustrates a subcarrier spacing configuration $\mu$.

[Table 1]

| μ | Δf = $2^\mu \cdot 15$ [kHz] | CP (Cyclic prefix) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations μ.

[Table 2]

| μ | $N^{slot}_{symb}$ | $N^{frame, \mu}_{slot}$ | $N^{subframe, \mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 3, μ=0, 1, 2 are exemplified. A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

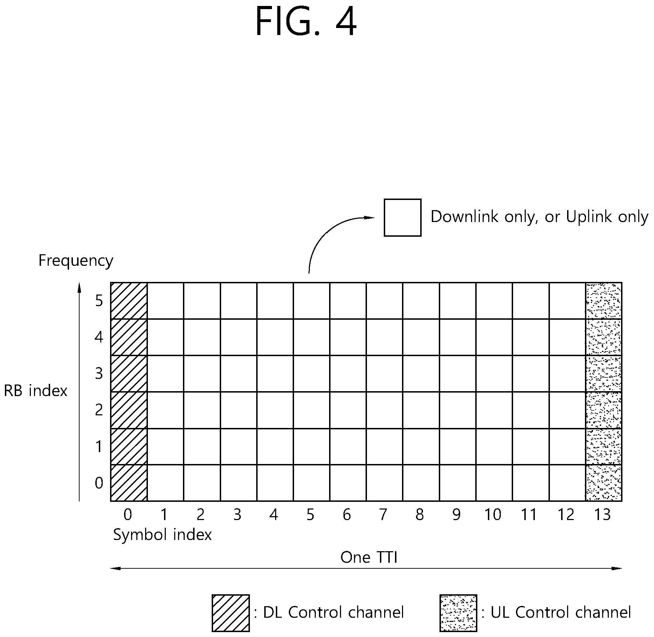

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain. In NR, the following technologies/characteristics may be applied. <Self-contained subframe structure> FIG. 4 shows an example of a frame structure for a new radio access technology. In NR, a structure in which a control channel and a data channel are time-division-multiplexed within one TTI, as shown in FIG. 4, can be considered as a frame structure in order to minimize latency.

In FIG. 4, hatched areas represent downlink control areas, and black areas represent uplink control areas. The unmarked area may be used for downlink data (DL data) transmission or uplink data (UL data) transmission. DL transmission and UL transmission are sequentially performed within one subframe. A feature of this structure is that DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

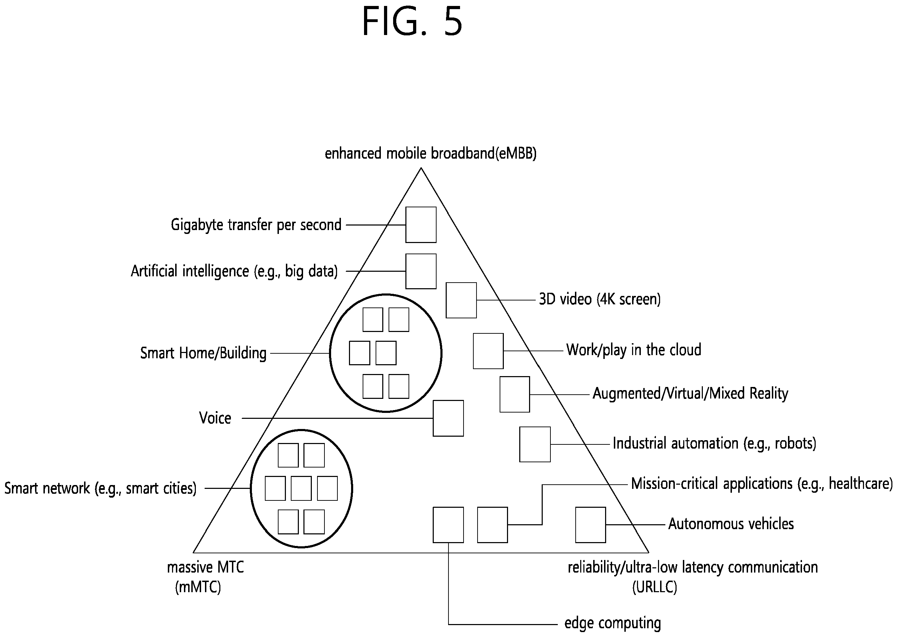

FIG. 5 shows an example of a 5G usage scenario to which the technical features of the present specification can be applied. The 5G usage scenario shown in FIG. 5 is just an example, and the technical features of the present specification may also be applied to other 5G usage scenarios not shown in FIG. 5.

Referring to FIG. 5, the three main requirements areas of 5G comprise (1) enhanced mobile broadband (eMBB) area, (2) massive machine type communication (mMTC) area, and (3) the ultra-reliable and low latency communications (URLLC) area. Some use cases may require multiple areas for optimization, while other use cases may focus on just one key performance indicator (KPI). 5G supports these diverse use cases in a flexible and reliable way.

eMBB focuses on overall improvements in data rate, latency, user density, capacity and coverage of mobile broadband access. eMBB targets a throughput of around 10 Gbps. eMBB goes far beyond basic mobile Internet access, and covers rich interactive work, media and entertainment applications in the cloud or augmented reality. Data is one of the key drivers of 5G, and we may not see dedicated voice services for the first time in the 5G era. In 5G, voice is expected to be handled simply as an application using the data connection provided by the communication system. The main causes of the increased traffic volume are the increase in content size and the increase in the number of applications requiring high data rates. Streaming services (audio and video), interactive video and mobile internet connections will become more widely used as more devices connect to the internet. Many of these applications require always-on connectivity to push real-time information and notifications to users. Cloud storage and applications are rapidly growing in mobile communication platforms, which can be applied to both work and entertainment. Cloud storage is a particular use case driving the growth of uplink data rates. 5G is also used for remote work in the cloud, requiring much lower end-to-end latency to maintain a good user experience when tactile interfaces are used. In entertainment, for example, cloud gaming and video streaming are other key factors driving the demand for mobile broadband capabilities. Entertainment is essential on smartphones and tablets everywhere, including in highly mobile environments such as trains, cars and planes. Another use case is augmented reality for entertainment and information retrieval. Here, augmented reality requires very low latency and instantaneous amount of data.

mMTC is designed to enable communication between high-volume, low-cost devices powered by batteries, and is intended to support applications such as smart metering, logistics, field and body sensors. mMTC targets 10 years of batteries and/or 1 million devices per square kilometer. mMTC enables seamless connectivity of embedded sensors in all fields and is one of the most anticipated 5G use cases. Potentially, IoT devices are predicted to reach 20.4 billion by 2020. Industrial IoT is one area where 5G is playing a key role enabling smart cities, asset tracking, smart utilities, agriculture and security infrastructure.

URLLC enables devices and machines to communicate with high reliability, very low latency and high availability, making it ideal for vehicular communications, industrial controls, factory automation, remote surgery, smart grid and public safety applications. URLLC targets latency on the order of 1 ms. URLLC includes new services that will transform industries through ultra-reliable/low-latency links, such as remote control of critical infrastructure and autonomous vehicles. This level of reliability and latency is essential for smart grid control, industrial automation, robotics, and drone control and coordination.

Next, a number of usage examples included in the triangle of FIG. 5 will be described in more detail.

5G can complement fiber-to-the-home (FTTH) and cable-based broadband (or DOCSIS) as a means of delivering streams rated at hundreds of megabits per second to gigabits per second. Such high speeds may be required to deliver TV at resolutions of 4K and beyond (6K, 8K and beyond) as well as virtual reality (VR) and augmented reality (AR). VR and AR applications include almost immersive sports events. Certain applications may require special network settings. For example, in the case of VR games, game companies may need to integrate their core servers with the network operator's edge network servers to minimize latency.

Automotive is expected to be an important new driver for 5G, with many use cases for mobile communications to vehicles. For example, entertainment for passengers requires both high capacity and high mobile broadband. The reason is that future users will continue to expect high-quality connections regardless of their location and speed. Another use case in the automotive sector is augmented reality dashboards. Drivers can identify objects in the dark above what they are viewing through the front window via an augmented reality contrast board. The augmented reality dashboard displays overlaid information to inform the driver about the distance and movement of objects. In the future, wireless modules will enable communication between vehicles, exchange of information between vehicles and supporting infrastructure, and exchange of information between vehicles and other connected devices (e.g., devices carried by pedestrians). A safety system can help reduce the risk of an accident by guiding the driver through an alternate course of action to make driving safer. The next step will be remotely controlled or self-driving vehicles. This requires very reliable and very fast communication between different autonomous vehicles and/or between vehicles and infrastructure. In the future, autonomous vehicles will perform all driving activities, leaving drivers to focus only on traffic anomalies that the vehicle itself cannot identify. The technological requirements of autonomous vehicles require ultra-low latency and ultra-high reliability to increase traffic safety to levels that humans cannot achieve.

Smart cities and smart homes, referred to as smart societies, will be embedded with high-density wireless sensor networks. A distributed network of intelligent sensors will identify conditions for cost and energy-efficient maintenance of a city or home. A similar setup can be done for each household. Temperature sensors, window and heating controllers, burglar alarms and appliances are all connected wirelessly. Many of these sensors typically require low data rates, low power and low cost. However, real-time HD video, for example, may be required in certain types of devices for surveillance.

The consumption and distribution of energy, including heat or gas, is highly decentralized, requiring automated control of distributed sensor networks. A smart grid interconnects these sensors using digital information and communication technologies to gather information and act on it. This information can include supplier and consumer behavior, enabling the smart grid to improve efficiency, reliability, affordability, sustainability of production and distribution of fuels such as electricity in an automated manner. The smart grid can also be viewed as another low-latency sensor network.

The health sector has many applications that can benefit from mobile communications. The communication system may support telemedicine, which provides clinical care at a remote location. This can help reduce barriers to distance and improve access to health services that are not consistently available in remote rural areas. It is also used to save lives in critical care and emergencies. Mobile communication-based wireless sensor networks can provide remote monitoring and sensors for parameters such as heart rate and blood pressure.

Wireless and mobile communications are becoming increasingly important in industrial applications. Wiring is expensive to install and maintain. Thus, the possibility of replacing cables with reconfigurable wireless links is an attractive opportunity for many industries. However, achieving this requires that wireless connections operate with comparable latency, reliability and capacity to cables, and that their management be simplified. Low latency and very low error probability are the new requirements that need to be connected with 5G.

Logistics and freight tracking is an important use case for mobile communications enabling the tracking of inventory and packages from anywhere using location-based information systems. Logistics and freight tracking use cases typically require low data rates, but wide range and reliable location information.

Hereinafter, this specification is explained.

In NR Rel-15/16, PUSCH repetition type A and type B are introduced, and transmission is performed as follows according to the PUSCH repetition type.

PUSCH repetition type A.

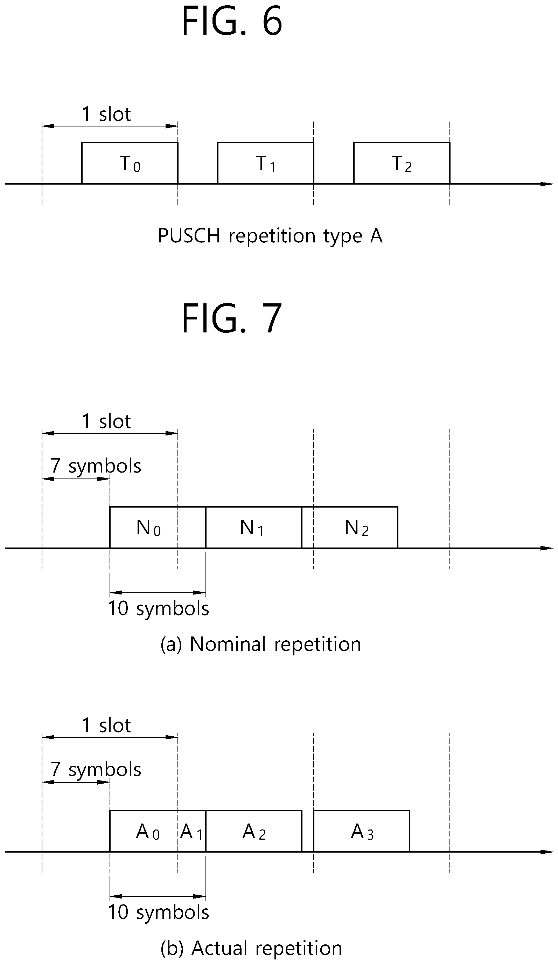

FIG. 6 schematically illustrates an example for PUSCH repetition type A.

PUSCH repetition type A is a slot-based repetition, and as shown in FIG. 6, repetition is performed with the same PUSCH transmission start symbol position and PUSCH transmission symbol length for each slot. At this time, if there is an invalid symbol that cannot be used for PUSCH transmission among symbol resources constituting a specific PUSCH repetition, transmission of the corresponding PUSCH repetition is dropped and is not performed. That is, when a total of 4 repeated PUSCH transmissions of Rep0, Rep1, Rep2, and Rep3 are performed, if an invalid symbol is included in symbol resources constituting Rep1, transmission of Rep1 is dropped, and only transmissions of Rep0, Rep2, and Rep3 are performed. Therefore, the actual number of repetitions may be smaller than the configured number of repetitions.

Regarding PUSCH repetition type A, the UE can be configured for frequency hopping by higher layer parameters.

One of two frequency hopping modes can be configured:

- Intra-slot frequency hopping applicable to single-slot and multi-slot PUSCH transmissions.
- Inter-slot frequency hopping applicable to multi-slot PUSCH transmission.

PUSCH repetition type B.

FIG. 7 schematically illustrates an example for PUSCH repetition type B.

According to FIG. 7, PUSCH repetition type B is repeated in units of symbol lengths through which actual PUSCHs are transmitted.

That is, when the PUSCH is transmitted in 10 symbols as in (a) of FIG. 7, PUSCH repetition is performed in units of 10 consecutive symbols. Repetition for determining PUSCH repetition transmission time resources without considering slot boundaries, invalid symbols, etc. is referred to as nominal repetition. However, in the case of actual PUSCH repetition, one PUSCH cannot be transmitted on a slot boundary. When PUSCH transmission includes a slot boundary, two actual repetitions are performed across the slot boundary as shown in (b) of FIG. 7. Also, one PUSCH transmission can be performed only through consecutive symbols. When an invalid symbol exists in a time resource where a PUSCH repetition is to be transmitted, actual repetition is configured using consecutive symbols with the invalid symbol as a boundary. For example, if symbols #0 to #9 constitute one nominal repetition and symbols #3 to #5 are invalid symbols, then symbols #0 to #2 and symbols #6 to #9, excluding invalid symbols, each constitute one actual repetition.

If a symbol (e.g., a DL symbol indicated by DCI format 2_0) that cannot be used for PUSCH transmission is included in one actual repetition resource, the actual repetition transmission is dropped and not performed.

When PUSCH repetition type A is applied in NR, the following process may be provided as an example of a PUSCH transmission slot resource and TB mapping process.

In the case of PUSCH repetition type A, when transmitting a PUSCH scheduled by DCI format 0_1 or 0_2 on a PDCCH having a CRC scrambled with C-RNTI, MCS-C-RNTI or CS-RNTI with NDI = 1,

the number of repetitions K can be determined as follows.

- If 'numberofrepetitions' exists in the resource allocation table, the number of repetitions K may be equal to 'numberofrepetitions'.
- If the UE is configured with 'pusch-AggregationFactor', the number of repetitions K may be equal to 'pusch-AggregationFactor'.
- In other cases, K=1 may be used.

For PUSCH repetition type A, and if K>1, the same symbol assignment is applied over K consecutive slots and the PUSCH may be limited to a single transport layer. The UE can repeat TB over K consecutive slots applying the same symbol allocation in each slot. The redundancy version applied at the n-th transmission point of the TB may be determined according to the table below, where n = 0, 1, ... K-1.

[Table 4]

| $rv_{id}$ indicated by the DCI scheduling the PUSCH | $rv_{id}$ to be applied to $n^{th}$ transmission occasion (repetition Type A) or $n^{th}$ actual repetition (repetition Type B) | | | |
|---|---|---|---|---|
| | n mod 4 = 0 | n mod 4=1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

In the case of PUSCH repetition type A, PUSCH transmission may be omitted in a slot of multi-slot PUSCH transmission. A transport block (TB) of PUSCH is mapped and transmitted through symbol resources within one slot. When PUSCH repetitions are performed K times by applying PUSCH repetition type A, TB is repeatedly transmitted K times using K consecutive slots. At this time, a redundancy version (RV) value is determined as shown in Table 4 according to the order of transmission occasions of TBs.

For coverage enhancement (CE) of the PUSCH, a technique of transmitting one transport block (TB) using symbol resources located in a plurality of slots may be introduced. Specifically, this may mean that time resources constituting the PUSCH are composed of contiguous/non-contiguous symbols located over a plurality of slots, and one TB is mapped to the corresponding PUSCH resource and transmitted. Alternatively, it may mean that one PUSCH is composed of symbol resources located in one slot, but one TB is mapped using a plurality of PUSCH resources located in different slots. That is, as a result, one TB is mapped and transmitted using contiguous/non-contiguous symbol resources located in a plurality of different slots. In this specification, this transmission technique is referred to as multi-slot TB mapping.

Meanwhile, when PUSCH and PUCCH transmission are performed in the same slot, PUCCH and PUSCH transmission are performed as follows.

When PUCCH without repetition and OFDM symbol resources of PUSCH transmission overlap in a specific slot, UCI piggyback on PUSCH (data and UCI multiplexing) is performed in which UCI is multiplexed with PUSCH data and transmitted through PUSCH.

When PUCCH with repetition and OFDM symbol resources of PUSCH transmission overlap in a specific slot, PUCCH is transmitted without performing PUSCH transmission in the corresponding slot resource as follows.

When the UE transmits the PUCCH through the first number of slots (N_PUCCH^repeat>1) and the UE transmits the PUSCH having repetition type A through the second number of slots, PUCCH transmission will overlap with PUSCH transmission in one or more slots, and the condition for multiplexing UCI in PUSCH is met in overlapping slots, and the UE transmits PUCCH and does not transmit PUSCH in overlapping slots.

In this specification, when performing PUSCH TB mapping to multi-slots for coverage extension of a UE, a method of configuring slot resources to which one TB is mapped is proposed.

In this specification, a PUSCH in which one TB is mapped and transmitted in multi-slots is referred to as a TB processing over multi-slot (TBoMS) PUSCH.

The contents of this specification are described from the viewpoint of transmission of PUSCH, but the contents of this specification include transmission of other channels such as PUCCH, PDSCH, and PDCCH as well as PUSCH.

Additional advantages, objects and features of the present disclosure will be set forth in part from the following description and will become apparent to those skilled in the art in part from a review of the following or may be learned from practice of the present specification. The objectives and other advantages of this specification may be realized and attained by the structure particularly pointed out in the appended drawings as well as in the written description and claims of this specification.

The configuration, operation and other features of the present specification will be made clear by the embodiments of the present specification described with reference to the accompanying drawings.

In this specification, PUSCH repetitions (TB repetitions) are described on the assumption that PUSCH repetition type A is applied.

Hereinafter, it is assumed that the PUSCH is transmitted by applying multi-slot TB mapping in which one PUSCH TB is mapped to a plurality of slot resources and transmitted. For convenience, transmission of such a PUSCH is referred to as a TB processing over multi-slot (TBoMS) PUSCH.

A plurality of slots to which a TB is mapped may be configured as slots positioned consecutively or non-contiguously on the time axis. When a TB is mapped to a plurality of slots, it means that the TB is mapped to all or some symbol resources located in the corresponding slots. At this time, slot resources to which one TB is mapped are called transmission occasions of the TB.

While multi-slot TB mapping is applied for PUSCH transmission, repetition may be applied for additional coverage extension. For this purpose, TB transmission of PUSCH may be repeated. When PUSCH TB repetitions are performed K times, TB is repeatedly transmitted K times through K transmission occasions.

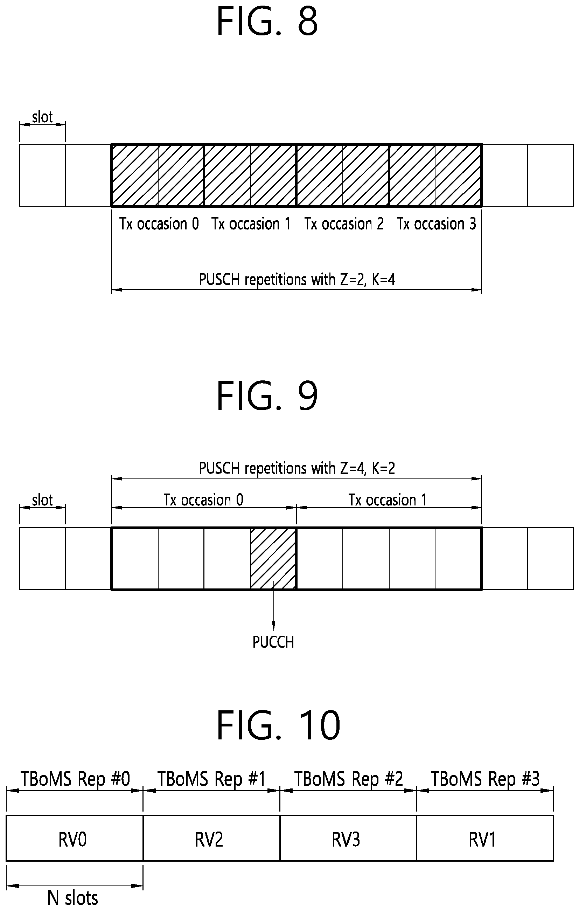

FIG. 8 schematically illustrates an example of TBoMS.

For example, if a slot resource to which one TB is mapped is composed of Z = 2 slots and the TB is transmitted repeatedly K = 4 times, as shown in FIG. 8, each Tx (transmission) opportunity of TB repetition is configured through Z = 2 slots, and a total of K = 4 from the 0th transmission occasion to the 3rd transmission occasion sent repeatedly.

In this case, in detail, only one transmission occasion may exist in a time interval in which one TB is mapped to a multi-slot. On the other hand, a plurality of transmission occasions may exist within a time interval in which one TB is mapped to multi-slots. When a plurality of transmission occasions may exist within a time interval in which one TB is mapped to multi-slots, the transmission time resource of the TBoMS PUSCH referred to in this specification may mean 1) the entire time interval in which one TB is mapped to multi-slots or 2) one transmission occasion. That is, the terms TBoMS PUSCH, TBoMS PUSCH transmission, and TBoMS PUSCH transmission resources in this specification may be replaced with a transmission occasion of the TBoMS PUSCH, transmission of the transmission occasion of the TBoMS PUSCH, and transmission occasion transmission resource of TBoMS PUSCH.

Conventionally, when transmission time resources of PUSCH and PUCCH without repetition overlap in a specific slot, UCI is piggybacked on PUSCH and transmitted. However, when PUSCH TB is mapped over multi-slots, during the slot resource period in which the PUSCH TB is transmitted, PUCCH transmission in which overlap will occur should be predicted in advance, and for this purpose, rate-matching for CBs (code blocks) transmitted through the PUSCH should be performed. Such an operation may be difficult to perform due to UE processing time or UCI multiplexing procedure.

FIG. 9 schematically illustrates another example of TBoMS.

For example, in FIG. 9, TB of PUSCH is mapped through Z = 4 slots and transmitted repeatedly K = 2 times in total. In this case, when the UE has already started transmission on PUSCH transmission occasion #0, PUCCH transmission may be scheduled in the last slot of transmission occasion #0. In this case, the UE cannot perform PUCCH piggyback to the PUSCH.

Characteristically, PUSCH repetition may not be performed when TBoMS PUSCH is transmitted. In this case, when Z, the number of slots to which PUSCH TBs are mapped, is greater than 1, K, the number of repetitions of PUSCH TBs, may always be equal to 1.

FIG. 10 shows a generalized example for the case where TBoMS is repeated four times.

According to FIG. 10, TBoMS can be composed of N slots, and when TBoMS is repeated four times, the first TBoMS iteration (TBoMS Rep#0), the second TBoMS iteration (TBoMS Rep#1), the third TBoMS iteration (TBoMS Rep#2), and the fourth TBoMS iteration (TBoMS Rep#3) each may have RV values of RV0 , RV2, RV3, and RV1, respectively.

In the present specification, when multi-slot TB mapping is performed for PUSCH transmission and repetition is applied, UE operation is proposed when PUSCH transmission and PUCCH transmission time resources overlap in order to solve the above problem.

The content of this specification may be applied only when the PUCCH is transmitted without repetition, that is, when the number of repetitions of the PUCCH ($N_{PUCCH}^{repeat}$) is 1.

A. Transmission method when overlapping PUSCH and PUCCH

This section proposes a PUSCH and PUCCH transmission method when PUSCH transmission and PUCCH transmission time resources overlap.

(1) Drop PUSCH transmission and perform PUCCH transmission

When the time resources of a specific transmission occasion of a specific PUSCH transmission and the transmission time resources of a PUCCH overlap, the UE does not perform (or stops) PUSCH transmission on a corresponding transmission occasion and performs PUCCH transmission. That is, when an overlap occurs between TBoMS PUSCH and PUCCH transmission resources, the UE transmits the PUCCH without transmitting the TBoMS PUSCH in all transmission slots of the TBoMS PUSCH where the overlap occurs. When the TBoMS PUSCH is repeatedly transmitted, TBoMS PUSCH transmission is not performed only for a TBoMS PUSCH repetition including resources where overlapping occurs, and drop/omit is performed. When using this method, the entire TBoMS PUSCH transmission is not performed due to collision between the TBoMS PUSCH and the SRS in some resources, resulting in inefficiency in terms of resource use.

Alternatively, when transmission time resources of PUSCH and PUCCH overlap in a specific slot, the UE does not transmit PUSCH in the corresponding slot, but transmits PUCCH. In this case, PUSCH transmission is punctured in PUSCH transmission resources in a slot in which PUSCH is not transmitted. When an overlap occurs between TBoMS PUSCH and PUCCH transmission resources, the UE does not transmit (puncture) the TBoMS PUSCH in the slot where the overlapping occurs and transmits the PUCCH. When using this method, compared to the method of dropping the entire TBoMS PUSCH transmission, resources not performing TBoMS PUSCH transmission can be reduced to obtain a benefit in terms of resource use.

In this case, when PUSCH and PUCCH transmission slots overlap, if PUSCH TB is mapped to a single-slot, the UE performs UCI piggyback on PUSCH in the corresponding slot. However, if PUSCH TB is mapped to multi-slots, the UE performs PUCCH transmission without performing PUSCH transmission in a corresponding slot or transmission occasion. In other words, when PUSCH and PUCCH transmission slots overlap, if the transmission occasion of the PUSCH is configured as a single slot, the UE performs UCI piggyback on PUSCH in the corresponding slot. But when the transmission occasion of PUSCH is configured in multi-slots, the UE performs PUCCH transmission without performing PUSCH transmission in the corresponding slot or transmission occasion.

For a clearer understanding of the specification, the examples described above may be rearranged and described through drawings as follows.

As described above, unlike the existing single-slot based PUSCH transmission, TBoMS in which TBs are mapped and transmitted over multi-slots has been introduced, and in this case, discussion on performing UCI multiplexing is necessary. Since TB is mapped over multiple slots, it is necessary to define the time resource at which UCI is multiplexed within the transmission time resource of TBoMS. In addition, when the existing UCI multiplexing operation is reused as it is, a problem may occur in that the TB mapping configuration over all slot resources is different depending on whether the UCI is multiplexed.

To this end, the present specification proposes methods for preventing transmission bits from being changed due to UCI multiplexing after TBoMS transmission bit mapping is determined. For example, a configuration for transmitting PUCCH instead of UCI multiplexing is proposed. In addition, the present specification proposes methods for performing UCI multiplexing only when the TBoMS transmission bit mapping decision is not affected.

In addition, in the description of this specification below, PUSCH repetition type A or PUSCH repetition type B may be applied to PUSCH repetitions (TB repetitions) in this specification.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

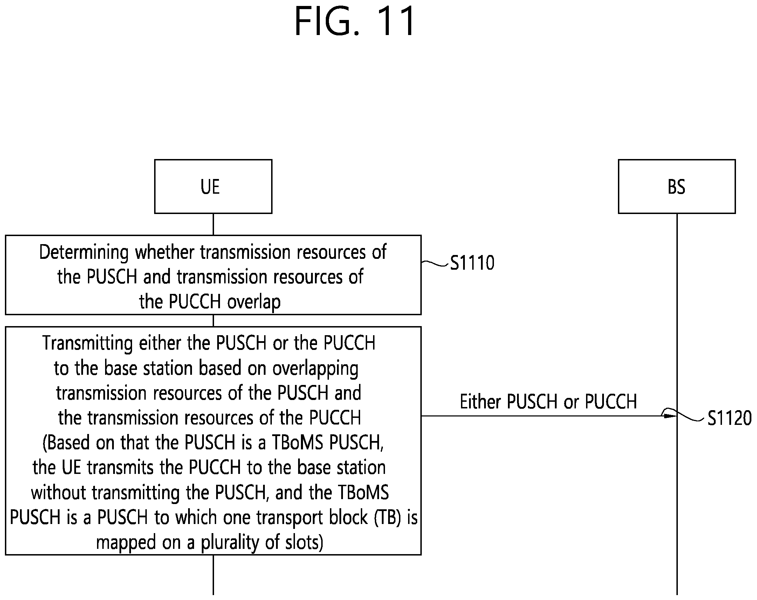

FIG. 11 is a flowchart of a method of transmitting one of a PUSCH or a PUCCH according to an embodiment of the present specification.

According to FIG. 11, the UE may determine whether transmission resources of the PUSCH and transmission resources of the PUCCH overlap (S1110). Since a more specific embodiment for this is the same as described later (and/or previously described), repeated description of overlapping content will be omitted for convenience of description.

Thereafter, the UE may transmit either the PUSCH or the PUCCH to the base station based on overlapping transmission resources of the PUSCH and the transmission resources of the PUCCH (S1120). Since a more specific embodiment for this is the same as described later (and/or previously described), repeated description of overlapping content will be omitted for convenience of description.

Here, based on that the PUSCH is a TB processing over multi-slot (TBoMS) PUSCH, the UE may transmit the PUCCH to the base station without transmitting the PUSCH. Here, the expression that the UE does not transmit the PUSCH may mean that transmission of the PUSCH is omitted, dropped, or punctured. Since a more specific embodiment for this is the same as described later (and/or previously described), repeated description of overlapping content will be omitted for convenience of description.

In addition, the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

For example, the UE may puncture transmission of the PUSCH. Since a more specific embodiment for this is the same as described later (and/or previously described), repeated description of overlapping content will be omitted for convenience of description.

For example, the UE may transmit uplink control information (UCI) to the base station through the PUCCH. Since a more specific embodiment for this is the same as described later (and/or previously described), repeated description of overlapping content will be omitted for convenience of description.

For example, the UE may puncture transmission of the TBoMS PUSCH on the slot where the overlap occurs. For example, the UE may transmit the TBoMS PUSCH on a slot in which the overlap does not occur. Since a more specific embodiment for this is the same as described later (and/or previously described), repeated description of overlapping content will be omitted for convenience of description.

Meanwhile, for example, the UE may receive DCI for scheduling transmission of the PUCCH from the base station. Details of this will be repeated and explained further below. Therefore, since a more specific embodiment thereof is the same as described later (and/or previously described), repeated description of redundant content will be omitted for convenience of description.

For example, based on that the UE receives the DCI prior to a predetermined symbol prior to the transmission start symbol of the TBoMS PUSCH, the UE may piggyback and transmit the UCI on the PUSCH. Since a more specific embodiment thereof is the same as described later (and/or previously described), repeated description of redundant content will be omitted for convenience of description.

For example, based on that the UE receives the DCI after a predetermined symbol prior to the transmission start symbol of the TBoMS PUSCH, the UE does not transmit the PUSCH and transmits the PUCCH to the base station based on the overlap. Since a more specific embodiment thereof is the same as described later (and/or previously described), repeated description of redundant content will be omitted for convenience of description.

For example, based on overlapping transmission resources of PUSCH to which one TB is mapped on a single slot and transmission resources of the PUCCH, the UE may piggyback the UCI to the PUSCH to which the one TB is mapped on the overlapping slot. Since a more specific embodiment thereof is the same as described later (and/or previously described), repeated description of redundant content will be omitted for convenience of description.

For example, transmission resources of the PUSCH may overlap transmission resources of the PUCCH on the time axis. Since a more specific embodiment thereof is the same as described later (and/or previously described), repeated description of redundant content will be omitted for convenience of description.

As described above, according to an embodiment of the present specification, transmission bits are not changed due to UCI multiplexing, so that stable data transmission can be performed.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

(2) Perform data and UCI multiplexing according to PUCCH scheduling time.

When performing existing UCI piggyback on PUSCH, multiplexing of PUSCH data and UCI is performed by rate-matching PUSCH data as much as the number of REs through which UCI is transmitted. At this time, when the PUSCH TB is composed of C CBs, rate-matching is equally performed on the C CBs.

Therefore, for the UE, at least PUCCH transmission in which overlap occurs during the resource interval in which the PUSCH TB is transmitted should be scheduled before transmission of the PUSCH TB starts, and considering the UE processing time, etc., PUCCH transmission should be scheduled earlier than the symbol in which PUSCH TB transmission starts.

Considering this, when PUSCH transmission and PUCCH transmission time resources overlap on transmission occasion #n where PUSCH TB is transmitted, the UE may operate as follows.

When the UE receives DCI for scheduling PUCCH transmission prior to 'before K symbol (s) of the start symbol of transmission occasion #n of PUSCH TB', the UE does not transmit the PUCCH, but piggybacks and transmits the UCI on the PUSCH.

When the UE receives DCI for scheduling PUCCH transmission later than 'before K symbol (s) of the start symbol of transmission occasion #n of PUSCH TB', the method in (1) above is applied.

Characteristically:

The UE transmits PUCCH without transmitting PUSCH in a slot in which transmission time resources of PUCCH and PUSCH overlap. In this case, PUSCH transmission is punctured in PUSCH transmission resources in slots in which PUSCH is not transmitted.

Alternatively, the UE transmits the PUCCH without transmitting the PUSCH on transmission occasion #n.

For the convenience of understanding this content, they are rearranged as follows. For example, as described above, the UE may receive DCI for scheduling transmission of the PUCCH from the base station. And, based on the UE receiving the DCI before a predetermined symbol than the transmission start symbol of the TBoMS PUSCH, the UE may piggyback and transmit the UCI on the PUSCH. In addition, based on the UE receiving the DCI after the predetermined symbol, the UE may transmit the PUCCH to the base station without transmitting the PUSCH based on the overlapping. Since a more specific embodiment thereof is the same as described later (and/or previously described), repeated description of redundant content will be omitted for convenience of description.

Rate-matching of TBoMS may be performed in units of slots within slot resources in which TBoMS is transmitted. That is, bit-selection and bit-interleaving for rate-matching may be performed in units of slots and mapped to each slot. Alternatively, rate-matching of TBoMS may be performed over multiple slot resources in which one TBoMS is transmitted. That is, in multiple slot resources, bit-selection is performed based on the amount of TBoMS transmitted resources, bit-interleaving is performed on the corresponding bits, and then mapping is performed on a plurality of slots.

UE behavior when PUSCH and PUCCH transmissions collide during PUSCH transmission varies depending on whether PUCCH transmission is repeated or not. In case of overlap where PUSCH and PUCCH are repeated, PUSCH transmission is stopped and PUCCH is transmitted in overlapping slot(s).

Meanwhile, when PUSCH and PUCCH collide without repetition, UCI may be multiplexed to PUSCH in overlapping slots.

The same principle can be applied to overlapping of TBoMS and PUCCH. When TBoMS and PUCCH repeatedly overlap, TBoMS transmissions can be dropped and PUCCH transmissions can be performed in overlapping slot(s).

Meanwhile, when PUCCH is transmitted without repetition, UCI may be multiplexed to TBoMS and transmitted in an overlapped slot.

In order to determine whether UCI multiplexing is possible, a timeline requirement between the last symbol of the corresponding PDCCH/PDSCH and the first symbol of PUSCH transmission may be considered.

In the case of existing UCI multiplexing on PUSCH, UCI can be multiplexed to PUSCH and transmitted when the following timeline conditions are satisfied.

The UE should complete reception of the corresponding PDSCH before the $T_1$ symbol (s) before the first symbol through which the PUSCH is transmitted. That is, the symbol gap between the corresponding PDSCH and the PUSCH transmitting UCI should be greater than or equal to $T_1$ symbol(s). In this case, the corresponding PDSCH means a PDSCH corresponding to the corresponding UCI information (A/N information). At this time, $T_1$ is equal to $N_1+1+d_{1,1}$, $N_1$ means a minimum processing time, and $d_{1,1}$ means a processing time margin of the corresponding PDSCH.

The UE should complete reception of the corresponding PDCCH before $T_2$ symbol(s) before the first symbol in which the PUSCH is transmitted. That is, the symbol gap between the corresponding PDCCH and the PUSCH transmitting UCI should be greater than or equal to $T_2$ symbol(s). In this case, the corresponding PDCCH means a PDCCH for scheduling the corresponding UCI information. At this time, $T_2$ is equal to $N_2+1+d_{2,1}$, $N_2$ means the minimum processing time, and $d_{2,1}$ means the processing time margin of the corresponding PDCCH.

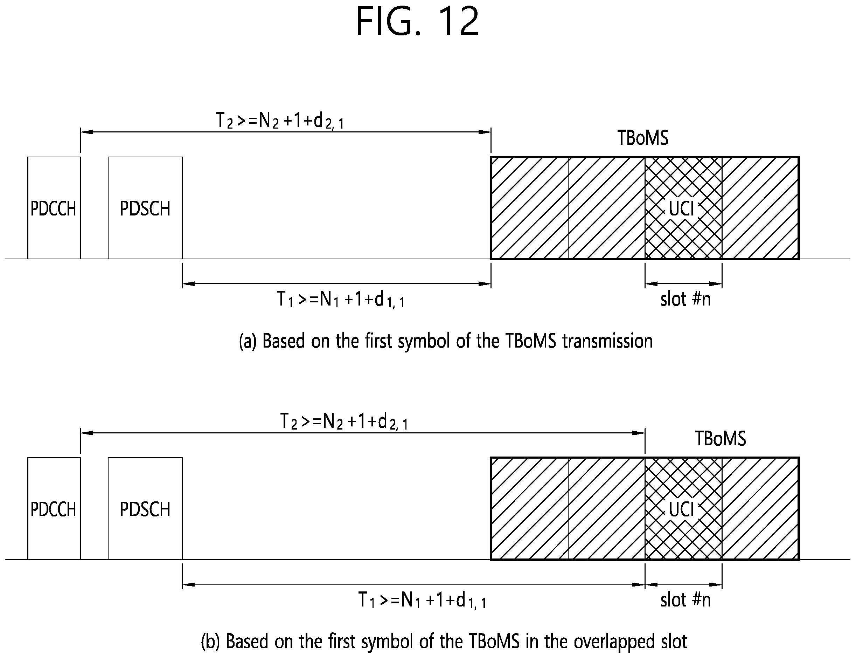

FIG. 12 schematically illustrates timeline requirements for UCI multiplexing on TBoMS.

When bit interleaving of TBoMS is performed for all allocated slot TBoMS, the rate-matched bit size may be different depending on whether UCI multiplexing is performed on TBoMS. Even if UCI is multiplexed only in a specific slot, the configuration of rate-matched bits can be changed in all TBoMS transmission slots compared to the case where UCI multiplexing is not performed.

Therefore, in order to perform UCI multiplexing, it may be necessary to determine whether to perform UCI multiplexing before starting TBoMS transmission. That is, if the interval between the first symbol of TBoMS transmission and the corresponding PDCCH/PDSCH transmission satisfies the timeline requirements, UCI multiplexing for TBoMS may be possible.

Specifically, if transmissions of TBoMS and PUCCH overlap in slot n, the UE performs UCI multiplexing in TBoMS when the following requirements are satisfied as shown in (a) of FIG. 12.

<Timeline Requirement A>

If the UCI to be transmitted is A/N information, the UE should complete reception of the corresponding PDSCH before $T_1$ symbol(s) before the first symbol in which the TBoMS is transmitted. That is, the symbol gap between the corresponding PDSCH and the TBoMS transmitting the UCI should be greater than or equal to $T_1$ symbol(s). In this case, the corresponding PDSCH means a PDSCH corresponding to the corresponding UCI information (A/N information). In this case, the first symbol through which the TBoMS is transmitted means the first symbol through which the TBoMS is transmitted in the first slot to which TBoMS transmission is allocated. Alternatively, the first symbol means a first symbol in which TBoMS is transmitted in a first slot in which TBoMS is actually transmitted. In this case, $T_1$ may be equal to $N_1+1+d_{1,1}$, $N_1$ may mean the minimum processing time, and $d_{1,1}$ may mean the processing time margin of the corresponding PDSCH.

f the UCI to be transmitted is SR or periodic CSI, the UE should complete reception of the corresponding PDCCH before $T_2$ symbol(s) before the first symbol in which the TBoMS is transmitted. That is, the symbol gap between the corresponding PDCCH and the TBoMS transmitting the UCI should be greater than or equal to $T_2$ symbol(s). In this case, the corresponding PDCCH means a PDCCH scheduling the corresponding TBoMS. In this case, the first symbol through which the TBoMS is transmitted means the first symbol through which the TBoMS is transmitted in the first slot to which TBoMS transmission is allocated. Alternatively, the first symbol means a first symbol in which TBoMS is transmitted in a first slot in which TBoMS is actually transmitted. In this case, $T_2$ may be equal to $N_2+1+d_{2,1}$, $N_2$ may mean the minimum processing time, and $d_{2,1}$ may mean the processing time margin of the corresponding PDCCH.

If this timeline requirement is not satisfied, the TBoMS transmission is punctured in slot #n and PUCCH may be transmitted.

Meanwhile, when the unit of bit interleaving for TBoMS is per slot, whether UCI multiplexing is performed in a slot may not affect TBoMS transmission in the previous slot(s).

Therefore, even if TBoMS transmission has already started or the symbol gap between the corresponding PDCCH/PDSCH and TBoMS transmission is insufficient, the UE can perform UCI multiplexing.

In this case, if the interval between the first symbol of TBoMS transmission and the corresponding PDCCH/PDSCH transmission in the overlapped slot satisfies the timeline requirement, UCI multiplexing for TBoMS may be performed. That is, when the following condition is satisfied as shown in (b) of FIG. 12, when TBoMS transmission and PUCCH transmission overlap in slot #n, the UE can multiplex UCI to TBoMS in slot #n.

<Timeline requirement B>

If the UCI to be transmitted is A/N information, the UE should complete reception of the corresponding PDSCH before $T_1$ symbol(s) before the first symbol in which TBoMS is transmitted in slot #n. That is, the symbol gap between the corresponding PDSCH and the resource through which the TBoMS transmitting UCI in slot #n should be greater than or equal to $T_1$ symbol(s). In this case, the corresponding PDSCH means a PDSCH corresponding to the corresponding UCI information (A/N information). In this case, $T_1$ may be equal to $N_1+1+d_{1,1}$, $N_1$ may mean the minimum processing time, and $d_{1,1}$ may mean the processing time margin of the corresponding PDSCH.

If the UCI to be transmitted is SR or periodic CSI, the UE should complete reception of the corresponding PDCCH before $T_2$ symbol(s) before the first symbol in which TBoMS is transmitted. That is, the symbol gap between the corresponding PDCCH and the resource through which the TBoMS transmitting UCI is transmitted in slot #n should be greater than or equal to $T_2$ symbol(s). In this case, the corresponding PDCCH means a PDCCH scheduling the corresponding TBoMS. In this case, the first symbol through which the TBoMS is transmitted means the first symbol through which the TBoMS is transmitted in the first slot through which the TBoMS is transmitted. In this case, $T_2$ may be equal to $N_2+1+d_{2,1}$, $N_2$ may mean the minimum processing time, and $d_{2,1}$ may mean the processing time margin of the corresponding PDCCH.

When performing this operation, the configuration of rate-matched bits transmitted in the subsequent TBoMS transmission slot may be changed according to whether UCI multiplexing is performed in slot #n. That is, it may be necessary to perform "on the fly" determination of transmitted bits in a particular TBoMS slot, which increases the UE's transmission complexity.

To avoid this complexity, if the device want to predetermine the transmitted rate-matching size for each slot before the first TBoMS slot is transmitted, whether or not to multiplex UCI may need to be determined prior to the first TBoMS transmission slot.

In this case, the timeline for UCI multiplexing should be based on the first symbol of the first slot of TBoMS transmission, and may be the same as when bit interleaving of TBoMS is performed for all TBoMS transmission slots. That is, considering the corresponding case, UCI multiplexing on TBoMS should be performed when the above <timeline requirement A> is satisfied. If this timeline requirement is not satisfied, the TBoMS transmission is punctured in slot #n and PUCCH may be transmitted.

When bit interleaving for TBoMS transmission is performed in units of slots, in order to reduce TBoMS transmission complexity of a TBoMS UE, coded bit(s) transmitted in each slot of TBoMS may need to be determined before TBoMS transmission starts. That is, coded bit(s) transmitted in each slot of the TBoMS may need to be determined before the first symbol of the first slot in which the TBoMS is transmitted. When the coded bit(s) to be transmitted characteristically be $d(0), d(1), ..., d(E-1)$, and when the first bit of the coded bits transmitted in the $n^{th}$ slot among the slot resources constituting the transmission of TBoMS is $d(k\_n)$, determination of $k\_n$ may need to be completed before transmission of TBoMS begins. If determined that the coded bit(s) transmitted in each slot of the TBoMS are sequential to the next coded bit(s) of the coded bit(s) transmitted in the previous slot, the value of $k\_n$ may be a value greater than the index of the last coded bit transmitted in slot n-1 among slot resources constituting transmission of TBoMS by 1. In this case, in order to determine the value of $k\_n$ before starting TBoMS transmission, before starting transmission of the TBoMS, the UE should determine the number of bits of UCI transmitted through the TBoMS even if it cannot determine bit information of UCI multiplexing transmitted through the corresponding TBoMS. In this case, in order for A/N to be multiplexed and transmitted from slot #n to TBoMS, the process of determining the number of A/N bits to be transmitted by the UE receiving the DL grant scheduling the PDSCH for the corresponding A/N should be completed before transmission of the corresponding TBoMS begins. To this end, if UCI transmitted through TBoMS is A/N information, the following timeline requirements should be satisfied.

< Timeline Requirement C >

If the UCI to be transmitted is A/N information, the UE should complete reception of the PDCCH scheduling the corresponding PDSCH X symbol(s) before the first symbol in which the TBoMS is transmitted. That is, the symbol gap between the PDCCH scheduling the corresponding PDSCH and the TBoMS transmitting UCI should be equal to or greater than X symbol(s). In this case, the corresponding PDSCH means a PDSCH corresponding to the corresponding UCI information (A/N information). At this time, the value of X may be defined in the specification as a fixed value. Characteristically, the value of X may be determined differently depending on the capability of the UE, subcarrier spacing, frequency region, and the like.

Meanwhile, in the case of aperiodic CSI, CSI information is multiplexed and transmitted on a PUSCH scheduled by a PDCCH. At this time, reporting of such aperiodic CSI may be scheduled together with TBoMS transmission. In this case, since the TBoMS is transmitted through multiple slots, it is necessary to clarify which slot among TBoMS transmission slot resources in the case of aperiodic CSI is multiplexed and transmitted. In this case, UCI multiplexing may be performed as follows.

(a) Among slot resources in which TBoMS is transmitted, UCI is multiplexed with TBoMS and transmitted within the resources of the first slot. In this case, the first slot may mean a first available slot among N available slots constituting transmission of the TBoMS. Alternatively, considering the situation in which actual TBoMS transmission can be performed in only some of the N available slots constituting transmission of TBoMS, the first slot may refer to a first slot in which actual TBoMS transmission is performed among N available slots constituting transmission of the TBoMS.

(b) UCI is multiplexed with TBoMS and transmitted within a resource of the last slot among slot resources in which TBoMS is transmitted. In this case, the last slot may mean the last available slot among the N available slots constituting the TBoMS transmission. Alternatively, considering the situation in which actual TBoMS transmission can be performed in only some of the N available slots constituting transmission of TBoMS, the last slot may refer to the last slot in which actual TBoMS transmission is performed among N available slots constituting transmission of the TBoMS.

(c) UCI is multiplexed and transmitted through the first slot or the last slot among slot resources through which TBoMS is transmitted. In this case, the UE may receive a location of a slot in which UCI is multiplexed among the first slot and the last slot through RRC/DCI or the like from the network. Based on the configured information, the UE multiplexes and transmits UCI in the first slot or the last slot among slot resources through which TBoMS is transmitted. In this case, the first slot may mean a first available slot among N available slots constituting transmission of the TBoMS. Alternatively, considering the situation in which actual TBoMS transmission can be performed in only some of the N available slots constituting transmission of TBoMS, the first slot may refer to a first slot in which actual TBoMS transmission is performed among N available slots constituting transmission of the TBoMS. In this case, the last slot may mean the last available slot among the N available slots constituting the TBoMS transmission. Alternatively, considering the situation in which actual TBoMS transmission can be performed in only some of the N available slots constituting transmission of TBoMS, the last slot may refer to the last slot in which actual TBoMS transmission is performed among N available slots constituting transmission of the TBoMS. In this case, the network may indicate a slot to transmit UCI by avoiding a slot in which TBoMS transmission is dropped due to other DL/UL transmission and reception.

(d) Among the slot resources through which TBoMS is transmitted, the position of the slot resource where UCI is multiplexed and transmitted is set from the network through RRC/DCI. Based on the configured information, the UE multiplexes and transmits UCI in the configured slot among slot resources through which TBoMS is transmitted. For example, when a value of K is set from the network, the UE multiplexes and transmits the UCI through the $K^{th}$ slot among the N slots allocated for TBoMS transmission. In this case, the network may indicate a slot to transmit UCI by avoiding a slot in which TBoMS transmission is dropped due to other DL/UL transmission and reception.

(3) Based on overlapping with the first slot of the transmission occasion, data and UCI multiplexing is performed.

Before transmission of the PUSCH TB starts, the UE can perform UCI piggyback on the PUSCH only when it is possible to predict the PUCCH transmission in which overlap will occur during the resource period in which the PUSCH TB is transmitted. Considering this, when PUSCH transmission and PUCCH transmission time resources overlap on transmission occasion #n where PUSCH TB is transmitted, the UE may operate as follows.

When the time resources of PUSCH transmission and PUCCH transmission overlap in the first slot of transmission occasion #n of PUSCH TB, the UE does not transmit the PUCCH, but piggybacks and transmits the UCI on the PUSCH.

When time resources of PUSCH transmission and PUCCH transmission overlap in slots other than the first slot of transmission occasion #n of PUSCH TB,

Alt 1. PUCCH is transmitted without transmitting PUSCH in a slot in which transmission time resources of PUCCH and PUSCH overlap. In this case, PUSCH transmission is punctured in PUSCH transmission resources in slots in which PUSCH is not transmitted.

Alt 2. Alternatively, the PUCCH is transmitted without transmitting the PUSCH at the corresponding PUSCH transmission occasion #n.

Alt 3. Alternatively, in the first slot of PUSCH transmission occasion #n+1, UCI is piggybacked on PUSCH and transmitted. In addition, when PUSCH transmission occasion #n is the last transmission occasion of PUSCH repetition, it may operate like Alt 1 or Alt 2 above.

(4) Perform data and UCI multiplexing when CB is composed of one

If the number of CBs constituting the PUSCH TB is 1, even if the PUSCH transmission occasion is configured with multi-slots, the UE can smoothly perform rate-matching of PUSCH TB when PUSCH and PUCCH transmission time resources overlap. Accordingly, when PUSCH transmission and PUCCH transmission time resources overlap on transmission occasion #n where PUSCH TB is transmitted, the UE may operate as follows.

When the number of CBs transmitted through the PUSCH is 1, that is, when the PUSCH TB is composed of one CB by code block segmentation, the UE does not transmit the PUCCH, but piggybacks and transmits the UCI on the PUSCH.

When the number of CBs transmitted through the PUSCH is two or more, that is, when the PUSCH TB is composed of two or more CBs by code block segmentation, the UE operates as in (1), (2), or (3) above.

At this time, the number of code blocks into which the PUSCH TB is segmented is determined according to B = 'the number of bits in the transport block (including CRC)' and the applied LDPC base graph as shown in the tables below.

In order to perform UCI piggyback on PUSCH when transmission time resources of PUSCH and PUCCH overlap even if the transmission occasion of PUSCH is configured with multi-slots, the number of CBs transmitted through the PUSCH may be limited to 1. That is, when the PUSCH TB is mapped to a plurality of slot resources (when the transmission occasion of the PUSCH is composed of multi-slots), the number of CBs transmitted on the PUSCH is limited to one. Accordingly, when the number of CBs transmitted on the PUSCH is one, the PUSCH TB may be mapped to a plurality of slot resources.

To this end, the size of TB transmitted through PUSCH may be limited. When the PUSCH TB is mapped to a plurality of slot resources (when the transmission occasion of the PUSCH is configured with multi-slots), the size of the transport block should be set to 3824 or less. This transport block size should be 3824 or less when not including CRC, and 3840 or less when including CRC. When the size of the transport block is 3824 or less, the number of generated code blocks becomes 1. To this end, more specifically, all or part of the following methods may be used.

Alt 1. The TB size (TBS) is determined by the value of the 'unquantized intermediate variable' ($N_{info}$) as described in the tables below. At this time, the gNB/network may set the value of $N_{info}$ not to exceed 3824. That is, the network sets parameters for determining $N_{info}$ so that the value of $N_{info}$ determined by the UE is 3824 or less. Therefore, it is expected that the network will appropriately set the TB size and MCS values of the TBoMS transmission so that the TBoMS transmission is composed of a single CB.

Alt 2. The UE determines that the maximum value of $N_{info}$ is 3824. That is, when $N_{info}$ has a value greater than 3824, the value of $N_{info}$ is determined to be 3824. In addition, the UE assumes that LDPC base graph 1 is always applied for TBoMS transmission.

Alt 3. The configurable MCS index is limited to a range of 0 to 9 so that the code rate R scheduled for TBoMS transmission does not exceed 0.67. Alternatively, the configurable MCS index for TBoMS transmission is limited to the range of 0 to 22. In addition, the UE determines that the maximum value of $N_{info}$ is 3824. That is, when the calculated $N_{info}$ has a value greater than 3824, the value of $N_{info}$ is determined to be 3824.

[Table 5]

## 5.2.2　Low density parity check coding

The input bit sequence to the code block segmentation is denoted by $b_0, b_1, b_2, b_3, ..., b_{B-1}$, where $B > 0$. If $B$ is larger than the maximum code block size $K_{cb}$, segmentation of the input bit sequence is performed and an additional CRC sequence of $L = 24$ bits is attached to each code block.

For LDPC base graph 1, the maximum code block size is:

- $K_{cb} = 8448$.

For LDPC base graph 2, the maximum code block size is:

- $K_{cb} = 3840$.

Total number of code blocks $C$ is determined by:

if $B \le K_{cb}$

$L = 0$

Number of code blocks: $C = 1$

$B' = B$

else

$L = 24$

Number of code blocks: $C = \lceil B/(K_{cb} - L) \rceil$.

$B' = B + C \cdot L$

end if

[Table 6]

# 6.2.2  LDPC base graph selection

For initial transmission of a transport block with coding rate $R$ indicated by the MCS index and subsequent re-transmission of the same transport block, each code block of the transport block is encoded with either LDPC base graph 1 or 2 according to the following:

- if $A \leq 292$, or if $A \leq 3824$ and $R \leq 0.67$, or if $R \leq 0.25$, LDPC base graph 2 is used;

- otherwise, LDPC base graph 1 is used,

where $A$ is the payload size.

[Table 7]

5.1.3.2 Transport block size determination

In case the higher layer parameter *maxNrofCodeWordsScheduledByDCI* indicates that two codeword transmission is enabled, then one of the two transport blocks is disabled by DCI format 1_1 if $I_{MCS}$= 26 and if $rv_{id}$ = 1 for the corresponding transport block. If both transport blocks are enabled, transport block 1 and 2 are mapped to codeword 0 and 1 respectively. If only one transport block is enabled, then the enabled transport block is always mapped to the first codeword.

For the PDSCH assigned by a PDCCH with DCI format 1_0, format 1_1 or format 1_2 with CRC scrambled by C-RNTI, MCS-C-RNTI, TC-RNTI, CS-RNTI, or SI-RNTI, if Table 5.1.3.1-2 is used and $0 \leq I_{MCS} \leq 27$, or a table other than Table is used and $0 \leq I_{MCS} \leq 28$, the UE shall, except if the transport block is disabled in DCI format 1_1, first determine the TBS as specified below:

    1) The UE shall first determine the number of REs ($N_{RE}$) within the slot.

      - A UE first determines the number of REs allocated for PDSCH within a PRB ( $N'_{RE}$ ) by $N'_{RE} = N_{sc}^{RB} \cdot N_{symb}^{sh} - N_{DMRS}^{PRB} - N_{oh}^{PRB}$ , where $N_{sc}^{RB} = 12$ is the number of subcarriers in a physical resource block, $N_{symb}^{sh}$ is the number of symbols of the PDSCH allocation within the slot, $N_{DMRS}^{PRB}$ is the number of REs for DM-RS per PRB in the scheduled duration including the overhead of the DM-RS CDM groups without data, as indicated by DCI format 1_1 or format 1_2 or as described for format 1_0, and $N_{oh}^{PRB}$ is the overhead configured by higher layer parameter *xOverhead* in *PDSCH-ServingCellConfig*. If the *xOverhead* in *PDSCH-ServingCellconfig* is not configured (a value from 0, 6, 12, or 18), the $N_{oh}^{PRB}$ is set to 0. If the PDSCH is scheduled by PDCCH with a CRC scrambled by SI-RNTI, RA-RNTI, MsgB-RNTI or P-RNTI, $N_{oh}^{PRB}$ is assumed to be 0.

      - A UE determines the total number of REs allocated for PDSCH ( $N_{RE}$ ) by

$$N_{RE} = \min\left(156, N'_{RE}\right) \cdot n_{PRB}$$ , where $n_{PRB}$ is the total number of allocated PRBs for the UE.

    2) Unquantized intermediate variable ($N_{info}$) is obtained by $N_{info} = N_{RE} \cdot R \cdot Q_m \cdot \upsilon$.

      If $N_{info} \leq 3824$

            Use step 3 as the next step of the TBS determination

      else

            Use step 4 as the next step of the TBS determination

(continued)

---

5.1.3.2 Transport block size determination

end if

3) When $N_{\inf o} \leq 3824$ , TBS is determined as follows

- quantized intermediate number of information bits

$$N'_{\inf o} = \max\left(24, 2^n \cdot \left\lfloor \frac{N_{\inf o}}{2^n} \right\rfloor\right) , \text{ where}$$

$$n = \max\left(3, \left\lfloor \log_2 (N_{\inf o}) \right\rfloor - 6\right) .$$

- use Table find the closest TBS that is not less than $N'_{\inf o}$ .

---

(5) Data and UCI multiplexing in CB units

When performing existing UCI piggyback on PUSCH, multiplexing of PUSCH data and UCI is performed by rate-matching PUSCH data as many times as the number of REs through which UCI is transmitted. At this time, when the PUSCH TB is composed of C CBs, rate-matching is equally performed on the C CBs.

Meanwhile, when PUSCH TB is mapped over multiple slots, in order to smoothly perform UCI piggyback to PUSCH, it may be considered that rate-matching is performed for RE resources in which UCI is transmitted only for code blocks transmitted in slots in which overlapping occurs.

That is, conventionally, when the number of code blocks constituting the PUSCH is C and the total number of bits of UCI piggybacked to the PUSCH is Nuci, rate-matching due to transmission of UCI is evenly performed on C code blocks, rate-matching due to transmission of UCI can be performed only for some code blocks as follows.

When transmission time resources of PUSCH and PUCCH overlap, rate-matching due to transmission of UCI may be performed on code blocks of PUSCH transmitted in slots where overlapping occurs. Rate-matching due to UCI transmission is not performed on code blocks transmitted in slots in which overlapping does not occur.

In the above operation, when a specific code block is transmitted in a resource within one slot, the effect of overlapping PUSCH and PUCCH in a specific slot can be minimized. For this purpose, when mapping C code blocks to Z slot resources, L code blocks may be mapped to resources within one slot so that one code block is not mapped across a plurality of slots. That is, C code blocks can be divided into Z slot resources by L each and mapped within each slot resource. In this case, the number $L_z$ of code blocks mapped to the z-th slot resource may be as follows.

Alt 1.

$$- L_z = \text{ceil}(C/Z) \text{ for } z = 0, 1, \ldots, (C \bmod Z) - 1$$

$$- L_z = \text{floor}(C/Z) \text{ for } z = (C \bmod Z), \ldots, Z\text{-}1$$

In this case, when two or more CBs are transmitted in one slot, whether or not UCI is transmitted may affect rate-matching of two or more CBs. In this case, it can operate as follows.

When UCI is multiplexed and transmitted in a specific slot in which TBoMS PUSCH is transmitted, and there are M code blocks including RE resources in the corresponding slot as transmission resources, rate-matching for UCI transmission RE resources is equally performed on the corresponding M code blocks. When the number of UCI transmission REs is N_UCI, rate-matching is performed by N_UCI/M RE resources for each corresponding M code block. At this time, N_UCI/M may be replaced with ceil(N_UCI/M) or floor(N_UCI/M).

When UCI is multiplexed and transmitted in a specific slot in which TBoMS PUSCH is transmitted, and there are M code blocks including RE resources in the corresponding slot as transmission resources, rate-matching is performed for as much as the amount of RE resources overlapped with UCI transmission REs in the corresponding M code blocks. For example, when code block 1 and code block 2 are transmitted in a slot in which UCI is transmitted, code block 1 overlaps the UCI transmission RE by N1 REs and code block 2 overlaps the UCI transmission RE by N2 REs, code block 1 and code block 2 perform rate-matching by N1 and N2 RE resources, respectively.

When UCI is multiplexed and transmitted in a specific slot in which TBoMS PUSCH is transmitted, rate-matching and RE mapping for each code block of TBoMS PUSCH is performed regardless of whether UCI is transmitted or not. At this time, TBoMS PUSCH transmission is punctured in the RE resource through which UCI is transmitted, and UCI transmission is performed.

When UCI is multiplexed and transmitted in a specific slot in which TBoMS PUSCH is transmitted, to avoid being affected by rate-matching of two or more code blocks, transmission of only one code block in one slot may be performed. To this end, when TBoMS PUSCH is transmitted through Z slots, CBs constituting TB can be divided into Z/A (where A = 1, 2, ..., Z). In this case, each CB is transmitted through resources within A number of slots. For Z slots of TBoMS PUSCH, the $n^{th}$ CB (where n=1, 2, ..., Z/A-1) is transmitted through n*A to (n+1)A-1$^{th}$ slot resources.

(6) slot level bit interleaving

The rate-matching process of CB is composed of a bit selection process and a bit interleaving process. In the case of the above methods (4) and (5), one CB may be mapped over a plurality of slots. In this case, even if UCI multiplexing is performed in the last slot among slots in which the CB is transmitted, since interleaving is performed over the entire CB, the CB in the previous slot affects the transmission bit configuration. Therefore, for UCI multiplexing to TBoMS PUSCH, interleaving of CB may be performed in unit of slot in which CB is transmitted, instead of performing interleaving of all bits constituting the CB. This method can be additionally applied to methods such as (4) or (5) above. If this method is used, whether or not UCI multiplexing is performed in a specific slot constituting CB transmission does not affect the transmission bit configuration in the previous slot constituting the corresponding CB.

(7) slot level rate-matching

When TBoMS is transmitted, a rate-matching process for multiple slot resources through which TB is transmitted can be performed (a) in units of slots or (b) throughout multiple slots through which TBoMS is transmitted.

More specifically, when rate-matching of TBoMS is performed in units of slots, select R_n bit(s) for each slot for the coded bit(s) that have gone through the channel encoding process, and these bit(s) are scrambling to construct rate-matched bit(s). These rate-matched bit(s) are mapped to RE resources in the corresponding slot and transmitted. At this time, the size of R_n means the size of the rate-matched bit(s) corresponding to slot #n, and R_n may be determined based on the number of (allocated) REs used for TBoMS transmission in slot #n. When the number of (allocated) REs used for TBoMS transmission is different for each slot, the value of R_n may vary according to n.

N slots allocated for TBoMS transmission are sequentially slot #0, slot #1, ... , slot #N-1. At this time, these N number of allocated slots may be physically located consecutively or may be located non-contiguously.

At this time, among slots allocated for TBoMS transmission, when the first slot is referred to as slot #0, in a corresponding slot, rate-matched bit(s) may be configured by selecting consecutive R_0 bit(s) from coded bit #k_0. At this time, the value of k_0 may be determined according to the RV value applied to the corresponding TBoMS transmission.

In slot #n allocated for TBoMS transmission, rate-matched bit(s) may be configured by selecting consecutive R_n bit(s) from coded bits #k_n. At this time, the coded bit #k_n may be the next coded bit of the last coded bit selected to construct the rate-matched bit (s) in slot #n-1.

<Rate-matching operation during TBoMS dropping>

Meanwhile, when TBoMS is allocated to be transmitted in a specific slot, but TBoMS is not actually transmitted in the corresponding slot, the following operation may be performed.

Alt a. If the last coded bit used for TBoMS transmission in slot #n-1 is coded bit #k-1, and TBoMS is allocated to be transmitted in slot #n, but TBoMS is not transmitted in that slot, in slot #n+1, which is the next TBoMS transmission slot, rate-matched bit(s) may be constructed by selecting consecutive R_n+1 coded bits from coded bit #k.

Alt b. If the last coded bit used for transmission of TBoMS in slot #n-1 is coded bit #k-1, and TBoMS is allocated to be transmitted in slot #n, but TBoMS is not transmitted in that slot, in slot #n+1, which is the next TBoMS transmission slot, assuming that R_n number of bit(s) is transmitted in slot #n, the rate-matched bit(s) can be constructed by selecting consecutive R_n+1 coded bits from coded bit #k+R_n.

When Alt a is applied, the configuration of bit(s) transmitted in each slot can be dynamically changed. If there is a misunderstanding between the network and the UE regarding this operation, a problem may occur in which the remaining TBoMS may not be properly transmitted. In this case, this problem can be solved by applying the method of Alt b.

< Rate-matching operation when UCI multiplexing on TBoMS >

On the other hand, R_n rate-matched bit(s) are assigned to be transmitted in a specific slot #n, but due to UCI multiplexing, etc., only R_n' (where R_n' <= R_n) rate-matched bit(s) can be transmitted. In this case, it can operate as follows.

Alt a. If the last coded bit used for TBoMS transmission in slot #n-1 is coded bit #k-1, and R_n rate-matched bit(s) are assigned to be transmitted in slot #n, but only R_n' rate-matched bit(s) are actually transmitted, in slot #n+1, which is the next TBoMS transmission slot, rate-matched bit(s) may be configured by selecting consecutive R_n+1 coded bits from coded bits #k+R_n'.

Alt b. If the last coded bit used for TBoMS transmission in slot #n-1 is coded bit #k-1, and R_n rate-matched bit(s) are assigned to be transmitted in slot #n, but only R_n' rate-matched bit(s) are actually transmitted, in slot #n+1, which is the next TBoMS transmission slot, assuming that R_n number of bit(s) is transmitted in slot #n, the rate-matched bit(s) can be configured by selecting consecutive R_n+1 coded bits from coded bit #k+R_n.

When Alt a is applied, the number and configuration of bit(s) transmitted in each slot can be dynamically changed depending on whether or not UCI multiplexing is performed in a specific slot. If there is a misunderstanding between the network and the UE regarding this operation, a problem may occur in which the remaining TBoMS may not be properly transmitted. In this case, this problem can be solved by applying the method of Alt b.

On the other hand, in the case of TBoMS transmission based on CG (configured grant), a problem may occur due to incorrectly determining the number of UCI transmission bits mentioned above. In the case of TBoMS transmission based on DG (dynamic grant), it is possible to avoid erroneous determination of the number of bits for HARQ A/N transmission by using the DAI field included in the UL grant. Considering this, R_n rate-matched bit(s) are assigned to be transmitted in a specific slot #n, but only R_n' (where R n' <= R_n) rate-matched bit(s) are actually transmitted for reasons such as UCI multiplexing, in the case of CG-based TBoMS transmission, the Alt b method may be applied, and in the case of DG-based TBoMS transmission, the Alt a method may be applied.

When UCI multiplexed and transmitted on TBoMS is A/N and/or periodic SR/CSI, problems such as wrong determination of the number of UCI transmission bits or determining whether or not to perform UCI multiplexing after TBoMS transmission starts may occur. On the other hand, when UCI multiplexed and transmitted on TBoMS is aperiodic CSI, an ambiguity issue in which the number of UCI transmission bits is incorrectly determined does not occur, and a timeline problem does not occur. Therefore, in the case of other UCI types, it is assumed that UCI is not transmitted in the previous slot and transmission coded bits are configured in each slot of TBoMS (i.e., determine the starting coded bit to be transmitted). In the case of multiplexing aperiodic CSI, transmission coded bits in the next slot may be configured (i.e., starting coded bits to be transmitted are determined) in consideration of transmission of the corresponding UCI. That is, in order to determine transmission coded bit(s) in slot #n+1, it is assumed that the RE resource used for transmission of aperiodic CSI in slot #n is not used for transmission of TBoMS but RE resources used for transmission of other UCI are used for transmission of TBoMS. That is, when aperiodic CSI is multiplexed in the TBoMS, the method of Alt a is applied, and when other types of UCI are multiplexed, the method of Alt b is applied.

More specifically, it can operate as follows. Although R_n rate-matched bit(s) are allocated to be transmitted in a specific slot #n, U1_RE_n REs are used for multiplexing of A-CSI, and U2_RE_n REs can be used for multiplexing of the remaining UCIs. At this time, when UCI multiplexing was not performed in slot #n, coded bit(s) of R_n TBoMS could be transmitted, but aperiodic CSI was transmitted in slot #n, so U1_n coded bit(s) of TBoMS should be reduced and transmitted. In addition, when UCI multiplexing was not performed in slot #n, R_n coded bit (s) of TBoMS could be transmitted, but UCI other than aperiodic CSI was transmitted in slot #n, so that U2_n coded bit (s) of TBoMS should be reduced and transmitted. Accordingly, by performing UCI multiplexing in slot #n, 'R_n - U1_n - U2_n' coded bit(s) of TBoMS can be transmitted. In this case, it can operate as follows.

When the last coded bit used for TBoMS transmission in slot #n-1 is coded bit #k-1, and R_n rate-matched bit(s) are assigned to be transmitted in slot #n, but only R_n-U1_n-U2_n rate-matched bit(s) are actually transmitted, in slot #n + 1, which is the next TBoMS transmission slot, rate-matched bits can be configured by selecting consecutive R_n + 1 coded bits from coded bits # (k + R_n - U1_n). That is, U1_n untransmitted coded bits are considered, but U2_n untransmitted coded bits are not considered, and the configuration of transmission coded bits in the next slot is determined.

Meanwhile, the aperiodic CSI may be interpreted as being replaced with CSI including both aperiodic CSI and semi-persistent CSI. This is because, in the case of semi-persistent CSI, it is not difficult to determine whether or not to transmit and the number of bits required for transmission before starting TBoMS transmission.

On the other hand, when the method of Alt b is applied, some systematic bit(s) cannot be transmitted, which can greatly affect performance. The case where the performance decrease is large is when the transmission MCS of TBoMS is high and the number of REs in which UCI is multiplexed is large. In consideration of this, it is proposed that the method of Alt b is applied, but TBoMS transmission and UCI transmission are limited and applied as follows. One or more of the following methods may be applied.

1) The number of REs of UCI multiplexed and transmitted in a TBoMS in a specific slot should be X or less. To this end, it is assumed that the number of REs of UCI multiplexed and transmitted in TBoMS is set to X or less. Alternatively, if the number of REs of UCI multiplexed and transmitted in the TBoMS determined by the UE is greater than X, the number of REs of UCI is determined to be X. Alternatively, if the number of REs of UCI multiplexed and transmitted in the TBoMS determined by the UE is greater than X, the UCI is transmitted through the PUCCH.

2) The number of transmission coded bits of UCI transmitted after being multiplexed to TBoMS in a specific slot should be Y or less. To this end, the UE assumes that the number of bits of UCI multiplexed and transmitted in the TBoMS is set to Y or less. Alternatively, if the number of REs of UCI multiplexed and transmitted in the TBoMS determined by the UE is greater than Y, the number of UCI bits is determined to be Y. Alternatively, if the number of REs of UCI multiplexed and transmitted in the TBoMS determined by the UE is greater than Y, the UCI is transmitted through the PUCCH.

3) In order to limit the amount of UCI transmission multiplexed and transmitted to TBoMS in a specific slot, the beta value (i.e., β_offset^PUSCH) should be less than or equal to a specific value. The beta value is used to determine 'the number of coded modulation symbols per layer' for UCI transmission as shown in the formula below. To this end, the UE assumes that the beta value for UCI multiplexing is set below beta_limit. Alternatively, when the set beta value is greater than beta_limit, the UE determines the applied beta value as beta_limit. Alternatively, when the set beta value is greater than beta_limit, the UE transmits UCI through PUCCH.

The formula at this time may be as follows.

<Equation 1>

$$Q'_{\text{ACK}} = \min\left\{ \left\lceil \frac{(O_{\text{ACK}} + L_{\text{ACK}}) \cdot \beta_{\text{offset}}^{\text{PUSCH}}}{R \cdot Q_m} \right\rceil, \left\lceil \alpha \cdot \sum_{l=l_0}^{N_{\text{symb,all}}^{\text{PUSCH}}-1} M_{\text{sc}}^{\text{UCI}}(l) \right\rceil \right\}$$

4) In the case of UCI multiplexed and transmitted in a TBoMS in a specific slot, the payload size of the UCI should be limited to Z bit(s) or less. For example, the UCI payload size should be 11 bit(s) or less or the UCI payload size should be 25 bit(s) or less. If the payload size of the UCI is greater than Z, the UE transmits the UCI through the PUCCH.

Alternatively, UCI multiplexed and transmitted in a TBoMS in a specific slot should be limited to the case where the UCI is encoded with 'small block code'. If UCI is encoded with 'polar code', the UE transmits the UCI through PUCCH.

5) In order for UCI to be multiplexed to TBoMS in a specific slot, the transmission MCS index of TBoMS should be less than or equal to a specific value and limited. To this end, the UE assumes that the MCS index value for UCI multiplexing is set below MCS_limit. Alternatively, when the instructed MCS index value is greater than MCS_limit, the UE determines the applied MCS index value as MCS_limit. Alternatively, when the MCS index value instructed by the UE is greater than MCS_limit, the UE transmits UCI through PUCCH.

Or, in particular, when the transmission MCS of TBoMS is high and the number of REs for which UCI is multiplexed is large, considering the fact that the performance reduction problem of Alt b is large, it is proposed to apply a different method of determining transmission coded bit(s) in slot #n+1 according to multiplexing of UCI in slot #n as follows. The following method is applied only to CSI (aperiodic CSI and/or semi-persistent CSI), and Alt b may be always applied to the remaining UCIs. Alternatively, the following method is applied only to CSI and SR, and Alt b can always be applied to A/N.

1) If the number of REs of UCI multiplexed and transmitted on TBoMS in slot #n is X or less, Alt b is applied to determine the transmission coded bit(s) of slot #n + 1. Otherwise, Alt a is applied.

2) If the number of transmission coded bits of UCI multiplexed and transmitted on TBoMS in slot #n is Y or less, Alt b is applied to determine the transmit coded bit(s) of slot #n+1, otherwise Alt a is applied.

3) If the beta value (i.e., β_offset^PUSCH) applied to transmit UCI multiplexed and transmitted on TBoMS in slot #n is less than a specific value, Alt b is applied to determine the transmit coded bit(s) of slot #n+1, otherwise Alt a is applied.

4) When the payload size of UCI transmitted after being multiplexed to TBoMS in slot #n is less than Z bit(s), Alt b is applied to determine the transmit coded bit(s) of slot #n+1, otherwise Alt a is applied.

5) When the MCS index applied to TBoMS transmission is less than a specific value when multiplexed and transmitted on TBoMS in slot #n, Alt b is applied to determine the transmit coded bit(s) of slot #n+1, otherwise Alt a is applied.

6) The UE determines whether to apply Alt a or Alt b by network signaling. In this case, network signaling for such determination may be semi-statically set through RRC and/or dynamically set through DCI.

Hereinafter, embodiments of the present specification will be described once again from various subject points of view.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

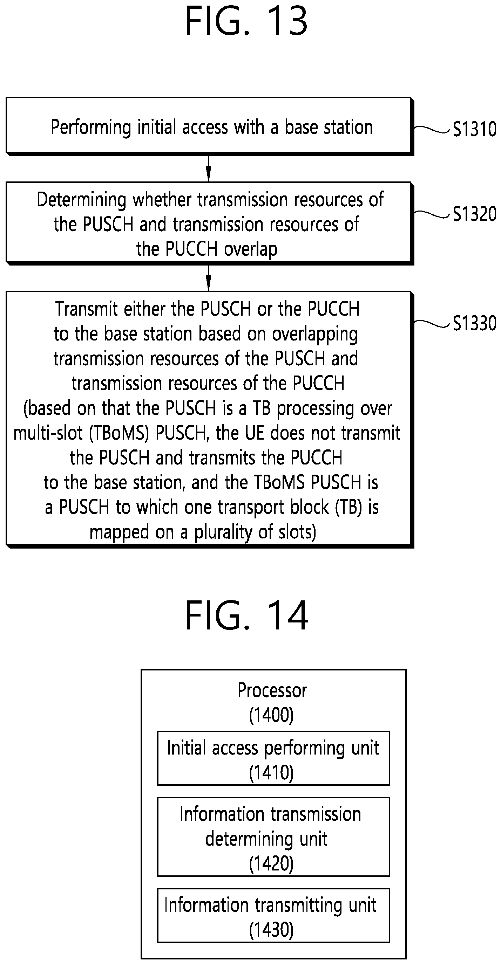

FIG. 13 is a flowchart of a method of transmitting one of a PUSCH or a PUCCH from a UE point of view according to an embodiment of the present specification.

According to FIG. 13, a UE may perform initial access with a base station (S1310). Since a more specific embodiment for this is the same as described later (and/or previously described), repeated description of overlapping content will be omitted for convenience of description.

The UE may determine whether transmission resources of the PUSCH and transmission resources of the PUCCH overlap (S1320). Since a more specific embodiment for this is the same as described later (and/or previously described), repeated description of overlapping content will be omitted for convenience of description.

The UE may transmit either the PUSCH or the PUCCH to the base station based on overlapping transmission resources of the PUSCH and transmission resources of the PUCCH (S1330). Since a more specific embodiment for this is the same as described later (and/or previously described), repeated description of overlapping content will be omitted for convenience of description.

Here, based on that the PUSCH is a TB processing over multi-slot (TBoMS) PUSCH, the UE does not transmit the PUSCH and transmits the PUCCH to the base station, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

FIG. 14 is a block diagram of an example of an apparatus for transmitting one of a PUSCH or a PUCCH from a UE point of view, according to an embodiment of the present specification.

According to FIG. 14, a processor 1400 may include an initial access performing unit 1410, an information transmission determining unit 1420, and an information transmitting unit 1430. Since a more specific embodiment for this is the same as described later (and/or previously described), repeated description of overlapping content will be omitted for convenience of description.

The initial access performing unit 1410 may be configured to perform initial access with the base station. Since a more specific embodiment for this is the same as described later (and/or previously described), repeated description of overlapping content will be omitted for convenience of description.

The information transmission determining unit 1420 may be configured to determine whether transmission resources of a physical uplink shared channel (PUSCH) and transmission resources of a physical uplink control channel (PUCCH) overlap.

The information transmitting unit 1430 may be configured to control the transceiver to transmit either the PUSCH or the PUCCH to the base station based on overlapping transmission resources of the PUSCH and the transmission resources of the PUCCH. Since a more specific embodiment for this is the same as described later (and/or previously described), repeated description of overlapping content will be omitted for convenience of description.

Here, based on that the PUSCH is a TB processing over multi-slot (TBoMS) PUSCH, the at least one processor is configured to transmit the PUCCH to the base station without transmitting the PUSCH, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

Although not shown separately, the present specification may also provide the following embodiments.

According to one embodiment, a UE (user equipment) may be provided. In this case, the UE includes a transceiver, at least one memory, and at least one processor operably coupled to the at least one memory and the transceiver. The at least one processor is configured to perform initial access with a base station, and determines whether transmission resources of a physical uplink shared channel (PUSCH) and transmission resources of a physical uplink control channel (PUCCH) overlap, and controlling the transceiver to transmit one of the PUSCH or the PUCCH to the base station based on overlapping transmission resources of the PUSCH and transmission resources of the PUCCH. Based on the PUSCH being a TB processing over multi-slot (TBoMS) PUSCH, the at least one processor is configured to transmit the PUCCH to the base station without transmitting the PUSCH, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

According to one embodiment, an apparatus may be provided. The device includes at least one memory and at least one processor operatively coupled to the at least one memory. The at least one processor is configured to perform initial access with a base station, and determines whether transmission resources of a physical uplink shared channel (PUSCH) and transmission resources of a physical uplink control channel (PUCCH) overlap, and controlling the transceiver to transmit one of the PUSCH or the PUCCH to the base station based on overlapping transmission resources of the PUSCH and transmission resources of the PUCCH. Based on the PUSCH being a TB processing over multi-slot (TBoMS) PUSCH, the at least one processor is configured to transmit the PUCCH to the base station without transmitting the PUSCH, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

According to one embodiment, a recording medium may be provided. In this case, the recording medium may be at least one computer readable medium including instructions based on what is executed by at least one processor. The at least one computer readable medium is configured to perform initial access with a base station, determine whether transmission resources of a physical uplink shared channel (PUSCH) and transmission resources of a physical uplink control channel (PUCCH) overlap, and control a transceiver to transmit one of the PUSCH or the PUCCH to the base station based on overlapping transmission resources of the PUSCH and the PUCCH, based on the PUSCH being a TB processing over multi-slot (TBoMS) PUSCH, the at least one computer readable medium is configured to transmit the PUCCH to the base station without transmitting the PUSCH, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

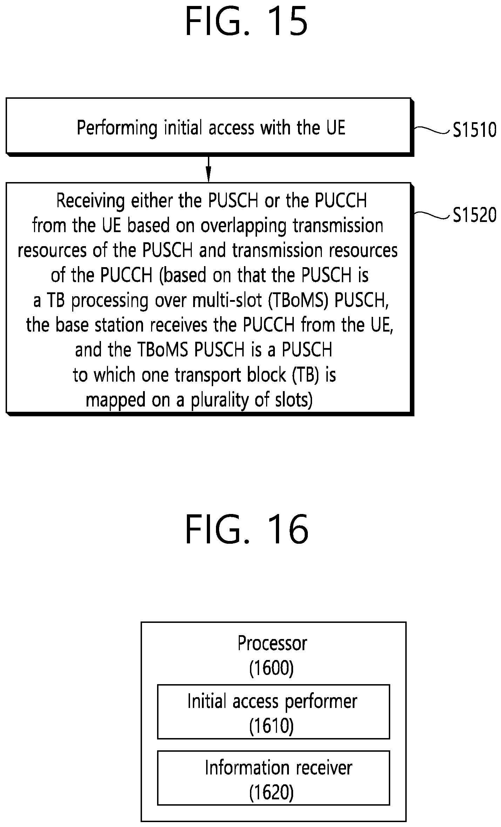

FIG. 15 is a flowchart of a method of receiving one of a PUSCH or a PUCCH from a base station perspective, according to an embodiment of the present specification.

The base station may perform initial access with the UE (S15 10). Since a more specific embodiment for this is the same as described later (and/or previously described), repeated description of overlapping content will be omitted for convenience of description.

The base station may receive either the PUSCH or the PUCCH from the UE based on overlapping transmission resources of the PUSCH and transmission resources of the PUCCH (S1520). Since a more specific embodiment for this is the same as described later (and/or previously described), repeated description of overlapping content will be omitted for convenience of description.

Here, based on that the PUSCH is a TB processing over multi-slot (TBoMS) PUSCH, the base station receives the PUCCH from the UE, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

FIG. 16 is a block diagram of an example of an apparatus for receiving one of a PUSCH or a PUCCH, from a base station perspective, according to an embodiment of the present specification.

According to FIG. 16, a processor 1600 may include an initial access performer 1610 and an information receiver 1620. Since a more specific embodiment for this is the same as described later (and/or previously described), repeated description of overlapping content will be omitted for convenience of description.

The initial access performer 1610 may be configured to perform initial access with the UE. Since a more specific embodiment for this is the same as described later (and/or previously described), repeated description of overlapping content will be omitted for convenience of description.

The information receiver 1620 may be configured to control the transceiver to receive either the PUSCH or the PUCCH from the UE based on overlapping transmission resources of the PUSCH and the transmission resources of the PUCCH. Since a more specific embodiment for this is the same as described later (and/or previously described), repeated description of overlapping content will be omitted for convenience of description.

Here, based on that the PUSCH is a TB processing over multi-slot (TBoMS) PUSCH, the base station receives the PUCCH from the UE, and the TBoMS PUSCH may be a PUSCH to which one transport block (TB) is mapped on a plurality of slots. Since a more specific embodiment for this is the same as described later (and/or previously described), repeated description of overlapping content will be omitted for convenience of description.

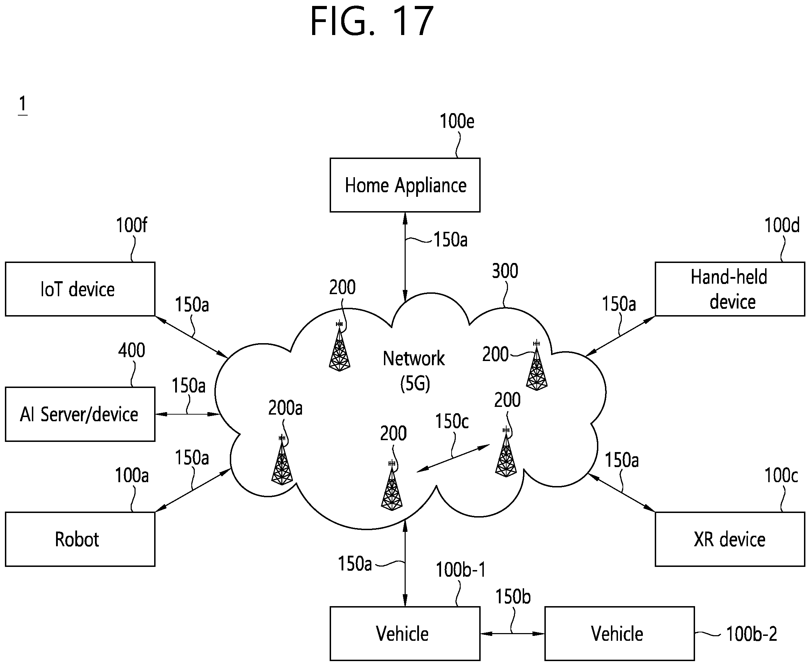

FIG. 17 illustrates a communication system 1 applied to the disclosure.

Referring to FIG. 17, the communication system 1 applied to this specification includes a wireless device, a base station, and a network. Here, the wireless device refers to a device that performs communication using a radio access technology (e.g., 5G new RAT (NR) or Long-Term Evolution (LTE)) and may be referred to as a communication/wireless/5G device. The wireless device may include, but limited to, a robot 100a, a vehicle 100b-1 and 100b-2, an extended reality (XR) device 100c, a hand-held device 100d, a home appliance 100e, an Internet of things (IoT) device 100f, and an AI device/server 400. For example, the vehicle may include a vehicle having a wireless communication function, an autonomous driving vehicle, a vehicle capable of inter-vehicle communication, or the like. Here, the vehicle may include an unmanned aerial vehicle (UAV) (e.g., a drone). The XR device may include augmented reality (AR)/virtual reality (VR)/mixed reality (MR) devices and may be configured as a head-mounted device (HMD), a vehicular head-up display (HUD), a television, a smartphone, a computer, a wearable device, a home appliance, digital signage, a vehicle, a robot, or the like. The hand-held device may include a smartphone, a smartpad, a wearable device (e.g., a smart watch or smart glasses), and a computer (e.g., a notebook). The home appliance may include a TV, a refrigerator, a washing machine, and the like. The IoT device may include a sensor, a smart meter, and the like. The base station and the network may be configured, for example, as wireless devices, and a specific wireless device 200a may operate as a base station/network node for other wireless devices.

The wireless devices 100a to 100f may be connected to the network 300 through the base station 200. Artificial intelligence (AI) technology may be applied to the wireless devices 100a to 100f, and the wireless devices 100a to 100f may be connected to an AI server 400 through the network 300. The network 300 may be configured using a 3G network, a 4G (e.g., LTE) network, or a 5G (e.g., NR) network. The wireless devices 100a to 100f may communicate with each other via the base station 200/network 300 and may also perform direct communication (e.g. sidelink communication) with each other without passing through the base station/network. For example, the vehicles 100b-1 and 100b-2 may perform direct communication (e.g. vehicle-to-vehicle (V2V)/vehicle-to-everything (V2X) communication). Further, the IoT device (e.g., a sensor) may directly communicate with another IoT device (e.g., a sensor) or another wireless device 100a to 100f.

Wireless communications/connections 150a, 150b, and 150c may be established between the wireless devices 100a to 100f and the base station 200 and between the base stations 200. Here, the wireless communications/connections may be established by various wireless access technologies (e.g., 5GNR), such as uplink/downlink communication 150a, sidelink communication 150b (or D2D communication), and inter-base station communication 150c (e.g., relay or integrated access backhaul (IAB)). The wireless devices and the base station/wireless devices, and the base stations may transmit/receive radio signals to/from each other through the wireless communications/connections 150a, 150b, and 150c. For example, the wireless communications/connections 150a, 150b, and 150c may transmit/receive signals over various physical channels. To this end, at least some of various configuration information setting processes, various signal processing processes (e.g., channel encoding/decoding, modulation/demodulation, resource mapping/demapping, and the like), and resource allocation processes may be performed on the basis of various proposals of the disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 8. For convenience of description, FR1 of the frequency ranges used for an NR system may refer to a "sub 6 GHz range", and FR2 may refer to an "above 6 GHz range" and may be referred to as a millimeter wave (mmW).

[Table 8]

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 9. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 9]

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

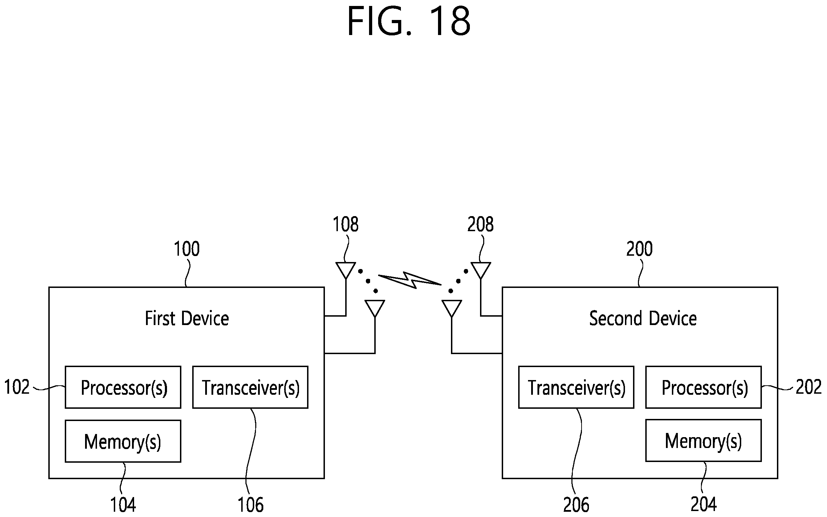

Hereinafter, an example of a wireless device to which the present specification is applied will be described. FIG. 18 illustrates a wireless device that is applicable to this specification.

Referring to FIG. 18, a first wireless device 100 and a second wireless device 200 may transmit and receive radio signals through various radio access technologies (e.g., LTE and NR). Here, the first wireless device 100 and the second wireless device 200 may respectively correspond to a wireless device 100x and the base station 200, and/or may respectively correspond to a wireless device 100x and a wireless device 100x of FIG. 17.

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In the specification, the wireless device may refer to a communication modem/circuit/chip.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In the specification, the wireless device may refer to a communication modem/circuit/chip.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

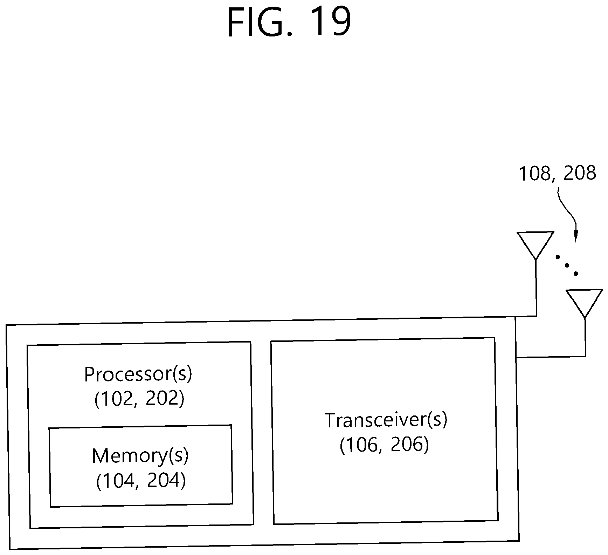

FIG. 19 shows another example of a wireless device applicable to the present specification.

According to FIG. 19, a wireless device may include at least one processor (102, 202), at least one memory (104, 204), at least one transceiver (106, 206), and one or more antennas (108, 208).

As a difference between the example of the wireless device described above in FIG. 18 and the example of the wireless device in FIG. 19, in FIG. 18, the processors 102 and 202 and the memories 104 and 204 are separated, but in the example of FIG. 19, the memory 104, 204 is included in the processor 102, 202.

Here, since the detailed description of the processors 102 and 202, the memories 104 and 204, the transceivers 106 and 206, and one or more antennas 108 and 208 have been described above, in order to avoid repetition of unnecessary description, Description of repeated description is omitted.

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of transmitting one of a physical uplink shared channel (PUSCH) or a physical uplink control channel (PUCCH) performed by a user equipment (UE) in a wireless communication system, the method comprising:

    performing initial access with a base station;
    determining whether transmission resources of the PUSCH and transmission resources of the PUCCH overlap; and
    based on overlapping the transmission resources of the PUSCH and the transmission resources of the PUCCH, transmitting one of the PUSCH or the PUCCH to the base station,
    wherein based on the PUSCH being a transport block processing over multi-slot (TBoMS) PUSCH, the UE transmit the PUCCH to the base station without transmitting the PUSCH, and
    wherein the TBoMS PUSCH is a PUSCH to which one transport block (TB) is mapped on a plurality of slots.

**2.** The method of claim 1, wherein the UE punctures transmission of the PUSCH.

**3.** The method of claim 2, wherein the UE transmits uplink control information (UCI) to the base station through the PUCCH.

**4.** The method of claim 3, wherein the UE punctures transmission of the TBoMS PUSCH on a slot where the overlapping occurs.

**5.** The method of claim 4, wherein the UE transmits the TBoMS PUSCH on a slot where the overlapping does not occur.

**6.** The method of claim 3, wherein the UE receives DCI for scheduling transmission of the PUCCH from the base station.

**7.** The method of claim 6, wherein the UE piggybacks and transmits the UCI on the PUSCH based on the UE receiving the DCI before a predetermined symbol prior to a transmission start symbol of the TBoMS PUSCH.

**8.** The method of claim 6, wherein the UE does not transmit the PUSCH based on the overlapping and transmits the PUCCH to the base station based on the UE receiving the DCI after a predetermined symbol prior to a transmission start symbol of the TBoMS PUSCH.

**9.** The method of claim 3, based on overlapping transmission resources of a PUSCH to which one TB is mapped on a single slot and transmission resources of the PUCCH, the UE piggybacks the UCI to a PUSCH to which the one TB is mapped on a slot where the overlapping occurs.

**10.** The method of claim 1, wherein transmission resources of the PUSCH overlap transmission resources of the PUCCH in a time axis.

**11.** A user equipment (UE) comprising:

    a transceiver;
    at least one memory; and
    at least one processor operably coupled with the at least one memory and the transceiver,
    wherein the at least one processor is adapted to:

        perform initial access with a base station;
        determine whether transmission resources of the PUSCH and transmission resources of the PUCCH overlap; and
        based on overlapping the transmission resources of the PUSCH and the transmission resources of the PUCCH, transmit one of the PUSCH or the PUCCH to the base station,
        wherein based on the PUSCH being a transport block processing over multi-slot (TBoMS) PUSCH, the UE transmit the PUCCH to the base station without transmitting the PUSCH, and
        wherein the TBoMS PUSCH is a PUSCH to which one transport block (TB) is mapped on a plurality of slots.

**12.** An apparatus, the apparatus comprising:

    at least one memory; and
    at least one processor operably coupled to the at least one memory,
    wherein the at least one processor is adapted to:

        perform initial access with a base station;
        determine whether transmission resources of the PUSCH and transmission resources of the PUCCH overlap; and
        based on overlapping the transmission resources of the PUSCH and the transmission resources of the PUCCH, transmit one of the PUSCH or the PUCCH to the base station,
        wherein based on the PUSCH being a transport block processing over multi-slot (TBoMS) PUSCH, the at least one processor is adapted to transmit the PUCCH to the base station without transmitting the PUSCH, and
        wherein the TBoMS PUSCH is a PUSCH to which one transport block (TB) is mapped on a plurality of slots.

**13.** At least one computer-readable medium (CRM) comprising an instruction based on being executed by at least one processor, wherein the instruction comprises:

performing initial access with a base station;
determining whether transmission resources of the PUSCH and transmission resources of the PUCCH overlap; and
based on overlapping the transmission resources of the PUSCH and the transmission resources of the PUCCH, controlling a transceiver to transmit one of the PUSCH or the PUCCH to the base station,
wherein based on the PUSCH being a transport block processing over multi-slot (TBoMS) PUSCH, the at least one processor is adapted to transmit the PUCCH to the base station without transmitting the PUSCH, and
wherein the TBoMS PUSCH is a PUSCH to which one transport block (TB) is mapped on a plurality of slots.

**14.** A method of receiving one of a physical uplink shared channel (PUSCH) or a physical uplink control channel (PUCCH) performed by a base station in a wireless communication system, the method comprising:

performing an initial access procedure with a user equipment (UE); and
receiving one of the PUSCH or the PUCCH from the UE based on overlapping transmission resources of the PUSCH and transmission resources of the PUCCH,
wherein based on the PUSCH being a TB processing over multi-slot (TBoMS) PUSCH, the base station receives the PUCCH from the UE, and
wherein the TBoMS PUSCH is a PUSCH to which one transport block (TB) is mapped on a plurality of slots.

**15.** A base station comprising:

a transceiver;
at least one memory; and
at least one processor operably coupled with the at least one memory and the transceiver,
wherein the at least one processor is adapted to:

perform an initial access procedure with a user equipment (UE); and
receive one of the PUSCH or the PUCCH from the UE based on overlapping transmission resources of the PUSCH and transmission resources of the PUCCH,
wherein based on the PUSCH being a TB processing over multi-slot (TBoMS) PUSCH, the base station receives the PUCCH from the UE, and
wherein the TBoMS PUSCH is a PUSCH to which one transport block (TB) is mapped on a plurality of slots.

# FIG. 1

# FIG. 2

**gNB**
- RRM between cells
- RB control
- Connection mobility control
- Wireless access control
- Measurement setting and providing
- Dynamic resource allocation (scheduler)

NG-RAN

**AMF**
- NAS security
- Idle state mobility processing

**UPF**
- Mobility anchoring
- PDU processing

5GC

Internet

**SMF**
- Terminal IP address allocation
- PDU session control

EP 4 280 522 A1

# FIG. 3

Frame (10 ms)

Subframe (1 ms)

15kHz 1Slot(14Symbol): 1ms Subframe

| 0 | 1 | 2 | 3 | 4 | 5 | 6 | 7 | 8 | 9 | 10 | 11 | 12 | 13 |

| 0 | 1 | 2 | 3 | 4 | 5 | 6 | 7 | 8 | 9 | 10 | 11 | 12 | 13 | 30kHz 1Slot(14Symbol): 0.5ms

| 0 | 1 | 2 | 3 | 4 | 5 | 6 | 7 | 8 | 9 | 10 | 11 | 12 | 13 | 60kHz 1Slot(14Symbol): 0.25ms

EP 4 280 522 A1

# FIG. 4

Downlink only, or Uplink only

Frequency

RB index

Symbol index

5 4 3 2 1 0

0 1 2 3 4 5 6 7 8 9 10 11 12 13

One TTI

▨ : DL Control channel    ▦ : UL Control channel

EP 4 280 522 A1

# FIG. 5

enhanced mobile broadband(eMBB)

Gigabyte transfer per second

Artificial intelligence (e.g., big data)

3D video (4K screen)

Smart Home/Building

Work/play in the cloud

Augmented/Virtual/Mixed Reality

Voice

Industrial automation (e.g., robots)

Smart network (e.g., smart cities)

Mission-critical applications (e.g., healthcare)

Autonomous vehicles

massive MTC
(mMTC)

reliability/ultra-low latency communication
(URLLC)

edge computing

EP 4 280 522 A1

# FIG. 6

1 slot

| T$_0$ | T$_1$ | T$_2$ |

PUSCH repetition type A

# FIG. 7

1 slot

7 symbols

| N$_0$ | N$_1$ | N$_2$ |

10 symbols

(a) Nominal repetition

1 slot

7 symbols

| A$_0$ | A$_1$ | A$_2$ | A$_3$ |

10 symbols

(b) Actual repetition

# FIG. 8

slot

Tx occasion 0   Tx occasion 1   Tx occasion 2   Tx occasion 3

PUSCH repetitions with Z=2, K=4

# FIG. 9

PUSCH repetitions with Z=4, K=2

slot

Tx occasion 0   Tx occasion 1

PUCCH

# FIG. 10

| TBoMS Rep #0 | TBoMS Rep #1 | TBoMS Rep #2 | TBoMS Rep #3 |
|---|---|---|---|
| RV0 | RV2 | RV3 | RV1 |

N slots

# FIG. 11

```
                    ┌──────────┐                              ┌──────────┐
                    │    UE    │                              │    BS    │
                    └────┬─────┘                              └────┬─────┘
      ┌──────────────────┴──────────────┐
      │ Determining whether transmission │
      │ resources of the PUSCH and       │── S1110
      │ transmission resources of        │
      │ the PUCCH overlap                │
      ├─────────────────────────────────┤
      │ Transmitting either the PUSCH    │
      │ or the PUCCH                     │
      │ to the base station based on     │
      │ overlapping transmission         │        Either PUSCH or PUCCH
      │ resources of the PUSCH and       │──────────────────────────────── S1120
      │ the transmission resources of    │
      │ the PUCCH                        │
      │ (Based on that the PUSCH is a    │
      │ TBoMS PUSCH, the UE transmits    │
      │ the PUCCH to the base station    │
      │ without transmitting the PUSCH,  │
      │ and the TBoMS PUSCH is a PUSCH   │
      │ to which one transport block     │
      │ (TB) is mapped on a plurality    │
      │ of slots)                        │
      └──────────────────┬──────────────┘
                         │                                    │
```

# FIG. 12

$T_2 >= N_2 + 1 + d_{2,1}$

TBoMS

PDCCH | PDSCH

UCI

$T_1 >= N_1 + 1 + d_{1,1}$

slot #n

(a) Based on the first symbol of the TBoMS transmission

$T_2 >= N_2 + 1 + d_{2,1}$

TBoMS

PDCCH | PDSCH

UCI

$T_1 >= N_1 + 1 + d_{1,1}$

slot #n

(b) Based on the first symbol of the TBoMS in the overlapped slot

EP 4 280 522 A1

# FIG. 13

Performing initial access with a base station ———S1310

Determining whether transmission resources of the PUSCH and transmission resources of the PUCCH overlap ———S1320

Transmit either the PUSCH or the PUCCH
to the base station based on overlapping
transmission resources of the PUSCH and
transmission resources of the PUCCH
(based on that the PUSCH is a TB processing over
multi-slot (TBoMS) PUSCH, the UE does not transmit
the PUSCH and transmits the PUCCH
to the base station, and the TBoMS PUSCH is
a PUSCH to which one transport block (TB) is
mapped on a plurality of slots) ———S1330

# FIG. 14

Processor
(1400)

Initial access performing unit
(1410)

Information transmission
determining unit
(1420)

Information transmitting unit
(1430)

# FIG. 15

Performing initial access with the UE ~S1510

Receiving either the PUSCH or the PUCCH
from the UE based on overlapping transmission
resources of the PUSCH and transmission resources
of the PUCCH (based on that the PUSCH is
a TB processing over multi-slot (TBoMS) PUSCH,
the base station receives the PUCCH from the UE,
and the TBoMS PUSCH is a PUSCH
to which one transport block (TB) is
mapped on a plurality of slots) ~S1520

# FIG. 16

Processor
(1600)

Initial access performer
(1610)

Information receiver
(1620)

# FIG. 17

EP 4 280 522 A1

# FIG. 18

EP 4 280 522 A1

# FIG. 19

108, 208

Processor(s)
(102, 202)

Memory(s)
(104, 204)

Transceiver(s)
(106, 206)

## INTERNATIONAL SEARCH REPORT

| International application No. |
|---|
| **PCT/KR2022/000807** |

| **A.** | **CLASSIFICATION OF SUBJECT MATTER** |
|---|---|

**H04L 5/00**(2006.01)i; **H04L 1/08**(2006.01)i; **H04L 1/00**(2006.01)i; **H04L 1/16**(2006.01)i; **H04W 72/04**(2009.01)i; **H04W 72/12**(2009.01)i

According to International Patent Classification (IPC) or to both national classification and IPC

| **B.** | **FIELDS SEARCHED** |
|---|---|

Minimum documentation searched (classification system followed by classification symbols)

H04L 5/00(2006.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), PUCCH(physical uplink control channel), 오버랩(overlap), TB(transport block), TBoMS(TB processing over multi-slot), 매핑(mapping)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2020-0108852 A (QUALCOMM INCORPORATED) 21 September 2020 (2020-09-21)<br>See paragraphs [0025], [0060]-[0061] and [0084]; and claim 1. | 1-6,9-15 |
| A | | 7-8 |
| Y | ZTE et al. Views on WID scope for Rel-17 NR coverage enhancement. RP-202665, 3GPP TSG RAN Meeting #90-e, Electronic Meeting. 30 November 2020.<br>See sections 2.1-2.2. | 1-6,9-15 |
| A | CMCC. Discussion on the PUSCH coverage enhancement. R1-2008026, 3GPP TSG RAN WG1 #103-e, e-Meeting. 01 November 2020.<br>See section 2. | 1-15 |
| A | SAMSUNG. PUSCH coverage enhancement. R1-2008181, 3GPP TSG RAN WG1 #103-e, e-Meeting. 01 November 2020.<br>See section 2. | 1-15 |

| ✓ Further documents are listed in the continuation of Box C. | | ✓ See patent family annex. |
|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 May 2022** | **03 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/000807** |

## C. DOCUMENTS CONSIDERED TO BE RELEVANT

| Category* | Citation of document, with indication, where appropriate, of the relevant passages | Relevant to claim No. |
|---|---|---|
| A | CHINA TELECOM. Discussion on PUSCH coverage enhancements. R1-2008874, 3GPP TSG RAN WG1 #103-e, e-Meeting. 01 November 2020.<br>See sections 2-3. | 1-15 |

**INTERNATIONAL SEARCH REPORT**
Information on patent family members

International application No.

**PCT/KR2022/000807**

| Patent document cited in search report | | | Publication date (day/month/year) | Patent family member(s) | | | Publication date (day/month/year) |
|---|---|---|---|---|---|---|---|
| KR | 10-2020-0108852 | A | 21 September 2020 | AU | 2019-210208 | A1 | 25 July 2019 |
| | | | | BR | 112020014468 | A2 | 01 December 2020 |
| | | | | CN | 111602365 | A | 28 August 2020 |
| | | | | EP | 3741075 | A1 | 25 November 2020 |
| | | | | JP | 2021-512530 | A | 13 May 2021 |
| | | | | SG | 11202005214 | A | 28 August 2020 |
| | | | | TW | 201933925 | A | 16 August 2019 |
| | | | | US | 10973038 | B2 | 06 April 2021 |
| | | | | US | 2019-0230683 | A1 | 25 July 2019 |
| | | | | US | 2021-0136791 | A1 | 06 May 2021 |
| | | | | WO | 2019-143982 | A1 | 25 July 2019 |

Form PCT/ISA/210 (patent family annex) (July 2019)